# EUROPEAN PATENT APPLICATION

(11) **EP 4 631 981 A1**
(43) Date of publication of application: **15.10.2025**
(21) Application number: 23900718.0
(22) Date of filing: 07.12.2023
(51) Int. Cl.: C08F 30/04, A01N 55/02, C08F 2/44, G02B 1/04

(54) **COMPOSITION, CURABLE COMPOSITION, CURED BODY, OPTICAL ARTICLE, LENS, GLASSES, AND ANTIBACTERIAL/ANTIVIRAL AGENT**

(30) Priority: 09.12.2022 JP 2022196858
(71) Applicant: TOKUYAMA CORPORATION, Yamaguchi 745-8648 (JP)
(72) Inventor: KAWASAKI Takayoshi, Shunan-shi, Yamaguchi 745-8648 (JP); MARUMOTO Hayato, Shunan-shi, Yamaguchi 745-8648 (JP)
(74) Representative: Papula Oy
(86) International application number: PCT/JP2023/043788
(87) International publication number: WO 2024/122606

(57) **Abstract**

Provided is a composition containing a first bismuth compound comprising bismuth and at least one of acryloyl and methacryloyl groups, and a terpene. Further provided are: a curable composition containing the aforesaid composition; a cured body of the curable composition; and an optical article, lens, glasses, and antibacterial/antiviral agent each containing the cured body.

## Description

### TECHNICAL FIELD

The present invention relates to a composition, a curable composition, a cured product, an optical article, a lens, eyeglasses, and an antibacterial or antiviral agent.

### BACKGROUND ART

The International Commission on Radiological Protection (ICRP) has alerted that radiation has a risk of causing cataract, in response to which in Japan, the Regulation on Prevention of Ionizing Radiation Hazards has been amended to lower the equivalent dose limit for eye lenses of radiation workers, which has been enforced from April 2021. To reduce the risk, radiation workers are strongly recommended to use appropriate eye protectors effectively.

Eye protective shield materials generally include lead glass and lead acrylic (for lightweight products). However, lead is harmful to the environment and human health, and there is a strong demand for lead-free alternative shield materials based on inorganic glass or resin. Some alternatives to lead include bismuth, barium, antimony, tin, and tungsten. In particular, bismuth-containing materials have been investigated. Bismuth, which has been used as a gastrointestinal drug for a long time, is harmless to the human body. Bismuth has the same ability to shield radiation as lead and thus is a suitable alternative to lead.

In general, bismuth compounds have low solubility in organic solvents containing polymerizable monomers, and they have limited applications. Recently, it has been reported that a cured product with sufficient optical transparency can be produced using a composition including: a bismuth compound having a (meth)acryloyl group-containing phosphate ester moiety bonded to bismuth; and a radically polymerizable monomer which is not a bismuth compound (see Patent Documents 1 and 2). Such a cured product, which includes a resin matrix containing bismuth components dispersed at a high concentration, has a high ability to shield not only X-rays for medical use but also other types of radiation such as β rays, and can be used to form radiation-shielding eyeglass lenses, shielding materials, screens, observation windows, and other products.

Bismuth compounds are also known to have antibacterial and antiviral properties and can be used as antibacterial or antiviral structural or coating materials. Such applications do not necessarily require transparency.

### Citation List

### Patent Document

Patent Document 1: PCT International Publication No. WO2022/014591
Patent Document 2: PCT International Publication No. WO2019/177084

### DISCLOSURE OF THE INVENTION

### Problems to be Solved by the Invention

It is an object of the present invention to provide a less odorous composition; a less odorous curable composition; a cured product resulting from curing of the curable composition; and an optical article, a lens, eyeglasses, and an antibacterial or antiviral agent each including the cured product.

### Means for Solving the Problems

Specific solutions to the problem described above include the following aspects.
<1> A composition including:
   a first bismuth compound including bismuth and at least one selected from the group consisting of an acryloyl group and a methacryloyl group; and
   a terpene.
<2> The composition according to aspect <1>, in which a ratio M1/M2 of a mass M1 of the first bismuth compound to a mass M2 of the terpene is 4 or more and 4990 or less.
<3> The composition according to aspect <1> or <2>, in which the terpene includes at least one compound selected from the group consisting of a semiterpene, a semiterpene derivative, a monoterpene, a monoterpene derivative, a sesquiterpene, and a sesquiterpene derivative.
<4> The composition according to any one of aspects <1> to <3>, in which the terpene includes at least one compound selected from the group consisting of a monocyclic monoterpene, a monocyclic monoterpene derivative, a bicyclic monoterpene, and a bicyclic monoterpene derivative.
<5> The composition according to any one of aspects <1> to <4>, in which the terpene includes at least one compound selected from the group consisting of (-)-α-pinene, (-)-β-pinene, (±)-camphene, α-terpinene, limonene, phenetole, p-cymene, terpinolene, 1,8-cineole, linalool, (+)-camphor, l-menthol, d-menthol, 1,4-cineole, nopinene, α-phellandrene, fenchone, borneol, and citronellol.
<6> The composition according to any one of aspects <1> to <5>, in which the terpene has a boiling point at 1 atm of 95°C or more and 250°C or less.
<7> The composition according to any one of aspects <1> to <6>, further including a coordinating organic compound having an acid dissociation constant pKa of 1.5 or more.
<8> The composition according to any one of aspects <1> to <7>, in which the first bismuth compound further has a phosphate bond.
<9> The composition according to any one of aspects <1> to <8>, in which the first bismuth compound further has a phenyl group.
<10> A curable composition including:
   the composition according to any one of aspects <1> to <9>; and
   a first polymerizable compound having at least one polymerizable group selected from the group consisting of an acryloyl group, a methacryloyl group, a vinyl group, and an allyl group.
<11> The curable composition according to aspect <10>, in which the curable composition has a content of the first bismuth compound of 10 mass% or more and 90 mass% or less.
<12> A cured product including a product resulting from curing of the curable composition according to aspect <10> or <11>.
<13> An optical article including the cured product according to aspect <12>.
<14> A lens including the cured product according to aspect <12>.
<15> A set of eyeglasses including the lens according to aspect <14>.
<16> An antibacterial or antiviral agent including the cured product according to aspect <12>.
<17> A composition including:
   a first bismuth compound including bismuth and at least one selected from the group consisting of an acryloyl group and a methacryloyl group; and
   a compound azeotropic with phenol.

### Effects of the Invention

The present invention provides a less odorous composition; a less odorous curable composition; a cured product resulting from curing of the curable composition; and an optical article, a lens, eyeglasses, and an antibacterial or antiviral agent each including the cured product.

### PREFERRED MODE FOR CARRYING OUT THE INVENTION

Hereinafter, specific embodiments of the present invention will be described in detail. As used herein, the term "(meth)acryloyl" means both "acryloyl" and "methacryloyl", and the term "(meth)acrylate" means both "acrylate" and "methacrylate". The same applies to "(meth)acrylic acid" and other similar terms.

### <<Composition>>

An embodiment is directed to a composition including: a first bismuth compound; and a terpene or a compound azeotropic with phenol. The first bismuth compound includes bismuth and at least one selected from the group consisting of an acryloyl group and a methacryloyl group. The composition according to an embodiment can produce a less odorous cured product. The reason for this may be as follows.

In some cases, the cured product containing the first bismuth compound contains impurities. For example, such impurities are derived from raw materials for the first bismuth compound or derived from by-products produced during the production of the first bismuth compound. Such impurities are difficult to completely remove during purification and may remain in the cured product. Such remaining impurities may cause the cured product to have an odor. As a result of diligent research, the present inventors have found that such impurities in the cured product can coordinate with bismuth in the first bismuth compound. Bismuth can have a valence of 0, 3, or 5. In the composition according to an embodiment, the valence of bismuth in the first bismuth compound can also reversely change to 0, 3, or 5. Furthermore, even with a valence of 3, bismuth is eight-coordinated, and the impurities in the composition can coordinate with a vacant coordination site of bismuth or can coordinate in the form of a substituent. The present inventors have found that such impurities coordinating with bismuth can dissociate from bismuth over time and volatilize into the atmosphere to cause an odor.

For example, when used as a raw material for the first bismuth compound, a phenyl phosphate moiety-containing compound can partially undergo hydrolysis to release phenol during the production of the first bismuth compound. The released phenol can coordinate with bismuth. In this case, phenol is an important example of the by-product that causes the odor. The phenol in the first bismuth compound or in the first bismuth compound-containing cured product can be analyzed using a headspace gas chromatograph mass spectrometer (GC/MS), and the amount of volatilization of the phenol can be easily determined using a phenol gas detector tube.

As mentioned above, the composition according to an embodiment includes a first bismuth compound and a terpene or a compound azeotropic with phenol. The terpene is highly compatible with impurities such as phenol in the curable composition. During the production of a cured product by polymerization of the curable composition, therefore, the terpene can volatilize together with impurities such as phenol from the curable composition or the cured product. The azeotropic compound is azeotropic with phenol. During the production of a cured product by polymerization of the curable composition, therefore, the azeotropic compound can volatilize together with phenol from the curable composition or the cured product. Therefore, the composition according to an embodiment can produce a less odorous cured product with a lower impurity content. Even when the first bismuth compound contains several tens ppm of an odor-causing by-product residue, the composition or cured product according to an embodiment can only contain 5 ppm or less of a volatile odor substance depending on the properties of the volatile molecule and, under optimal conditions, can only contain a volatile odor substance at not more than a detection limit level.

Hereinafter, each of components that may be used for the composition according to an embodiment will be described.

### <First Bismuth Compound>

The first bismuth compound includes bismuth and at least one selected from the group consisting of an acryloyl group and a methacryloyl group. The first bismuth compound, which includes bismuth, is useful as a radiation shielding material. The term "radiation" includes electromagnetic radiation and particle radiation. The term "electromagnetic radiation" includes X-rays and y rays. The term "particle radiation" includes α rays, β rays, neutron rays, and proton beams. The first bismuth compound has high X-ray shielding performance and is suitable for use as an X-ray shielding material or as a material for shielding β rays, which can produce X-rays.

The first bismuth compound has high solubility in a radically polymerizable compound having at least one radically polymerizable group selected from the group consisting of a nitrile group, an acryloyl group, a methacryloyl group, a vinyl group, and an allyl group. Therefore, using the first bismuth compound makes it possible to obtain a curable composition with a high bismuth content and to obtain a cured product with a high bismuth content. The first bismuth compound has higher solubility in a radically polymerizable compound than bismuth subsalicylate alone.

The first bismuth compound may be any type of compound including bismuth and a (meth)acryloyl group. In the compound, for example, bismuth may be bonded to the (meth)acryloyl group directly or via a linking group. The linking group may include, for example, an oxygen atom, a sulfur atom, a nitrogen atom, or a phosphate group.

The first bismuth compound preferably further has a phosphate bond. The first bismuth compound more preferably includes bismuth and a (meth)acryloyl group-containing first phosphate ester moiety bonded to bismuth. Such a first bismuth compound tends to be more compatible with various polymerizable compounds. The first phosphate ester moiety and bismuth may be bonded through any type of bonding, such as ionic bonding, coordination bonding, or covalent bonding. Specifically, the first bismuth compound may be a phosphate or complex salt including a bismuth cation (Bi³⁺ or Bi⁵⁺) and a first phosphate ester anion or may be a phosphorylated compound or complex.

The first bismuth compound may be a mono(meth)acrylate having one (meth)acryloyl group, a di(meth)acrylate having two (meth)acryloyl groups, a tri(meth)acrylate having three (meth)acryloyl groups, or a polyfunctional (meth)acrylate having four or more (meth)acryloyl groups.

The first bismuth compound may include, for example, a first phosphate ester moiety represented by Formula (2) below.

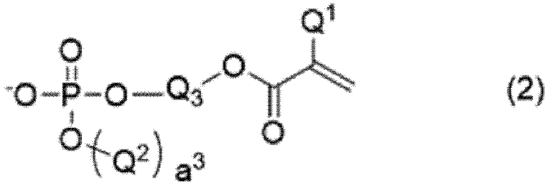

In Formula (2), Q¹ is a hydrogen atom or a methyl group. Q¹ is preferably a methyl group.

In Formula (2), Q² is a hydrogen atom, a linear or branched alkyl group having 1 or more and 10 or less carbon atoms, an aryl group having 4 or more and 16 or less carbon atoms, or a (meth)acryloyloxyalkylene group. The alkyl group preferably has 1 or more and 6 or less carbon atoms. The aryl group preferably has 5 or more and 8 or less carbon atoms. The aryl group is preferably a phenyl group. The alkylene group in the (meth)acryloyloxyalkylene group typically has 1 or more and 10 or less carbon atoms, preferably 1 or more and 3 or less carbon atoms. The (meth)acryloyloxyalkylene group is preferably a (meth)acryloyloxyethylene group.

In Formula (2), a³ is 0 or 1. When a³ is 0, the oxygen atom bonded to Q² is in the form of O⁻.

In Formula (2), Q³ is a linear or branched alkylene group having 1 or more and 10 or less carbon atoms or a linear or branched alkyleneoxyalkylene group having 1 or more and 10 or less carbon atoms.

The first bismuth compound may further include an additional compound moiety bonded to bismuth in addition to the first phosphate ester moiety. Bismuth and the additional compound moiety may be bonded through any of ionic bonding, coordination bonding, or covalent bonding. Specifically, the first bismuth compound may be a phosphate or complex salt including a bismuth cation (Bi³⁺ or Bi⁵⁺), a first phosphate ester anion, and an additional compound moiety anion or may be a phosphorylated compound or complex.

Examples of the additional compound include at least one selected from the group consisting of salicylic acid and (meth)acrylic acid.

To have improved solubility in a radically polymerizable compound, the first bismuth compound preferably has a molar ratio of the additional compound moiety to the first phosphate ester moiety of 0.1 to 10, more preferably 0.1 to 5, even more preferably 0.1 to 1, furthermore preferably 0.1 to 0.5. The first bismuth compound may include two or more first phosphate ester moieties. In such a case, the above molar ratio range is based on the total number of moles of the first phosphate ester moieties.

The bonding between the first phosphate ester moiety and bismuth can be confirmed by infrared (IR) spectroscopy. Specifically, the first bismuth compound may be determined to have bonding between the first phosphate ester moiety and bismuth when the infrared spectroscopy of the first bismuth compound shows a peak at 1670-1700 cm⁻¹. This peak is considered characteristic of stretching vibration in Bi-O-P. This peak is not observed in bismuth or the first phosphate ester before they are bonded together.

For example, the IR spectrum may be measured using Spectrum One manufactured by PerkinElmer under the conditions of single reflection ATR and a number of scans of 4.

In addition, the number of bonded salicylic or (meth)acrylic acid moieties and the number of bonded phosphate ester moieties of each type in the first bismuth compound can be determined by a combination of NMR (nuclear magnetic resonance spectroscopy), MALDI-TOF-MS (matrix-assisted laser desorption ionization time-of-flight mass spectrometry), XPS (X-ray photoelectron spectroscopy), and EDS (energy dispersive X-ray spectroscopy) for elemental analysis and so on.

¹H-NMR and ³¹P-NMR measurements may be performed using a nuclear magnetic resonance spectrometer (JNM-ECA400II manufactured by JEOL), deuterated acetone (solvent), and a sample concentration of 1 mass%.

XPS measurement may be performed using an X-ray photoelectron spectrometer (ESCA5701ci/MC manufactured by ULVAC-PHI), a monochromatized Al-Kα X-ray source (14 kV-330W), an aperture diameter of φ800 µm, and a photoelectron extraction angle of 45 degrees. The sample may be crushed in an agate mortar, and the resulting powder may be fixed to a substrate with a carbon tape and then introduced into the chamber for measurement.

The first bismuth compound preferably further has a phenyl group. The first bismuth compound having a phenyl group tends to have high compatibility with a radically polymerizable monomer. The presence of a phenyl group in the first bismuth compound can be confirmed, for example, by FT-IR (Fourier transform infrared spectroscopy).

The first bismuth compound may be, for example, a phosphate or complex salt represented by Formula (1) below.

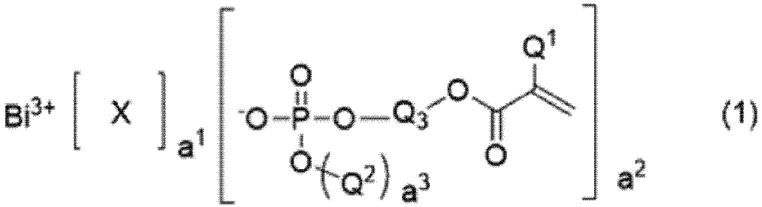

In Formula (1), Q¹, Q², Q³, and a³ are the same as in Formula (2).

In Formula (1), X is a (meth)acrylic acid moiety represented by Formula (1a) below or a salicylic acid moiety represented by Formula (1b) below. In Formula (1a), R is a hydrogen atom or a methyl group. X is preferably a salicylic acid moiety represented by Formula (1b) below.

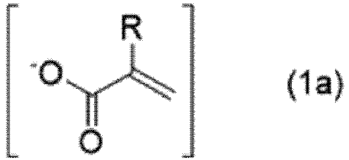

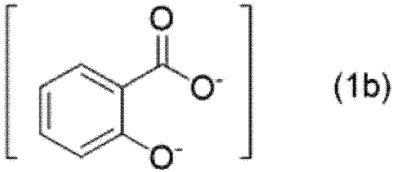

In Formula (1), a¹ is a number of 0 or more and 1 or less, a² is a number of 0.1 or more and 3 or less, and a¹ + a² is a number of 2 or more and 3 or less.

Whether the first bismuth compound has the structure of Formula (1) may be confirmed by detecting the protonated molecular ion or sodium adduct molecular ion of the compound in MALDI-TOF-MS measurement. For example, a protonated molecular ion with an m/z of 667 can be detected in the measurement of the first bismuth compound of Formula (1) with a¹ being a number of 1 to 2, X being a salicylic acid moiety, a² being a number of 1 to 3, Q¹ being a methyl group, Q² being a methacryloyloxyalkyl group, and Q³ being a linear alkyl group having 2 carbon atoms.

The MALDI-TOF-MS measurement may be performed using a Bruker rapifleX TOF/TOF instrument; a matrix of CHCA (α-cyano-4-hydroxycinnamic acid), DIT (dithranol), and DHB (2,5-dihydroxybenzoic acid); and sodium trifluoroacetate (cationizing agent). The measurement may be performed in the reflector/positive mode with a mass (m/z) range of 20 to 4000.

The first bismuth compound may be a mixture of two or more first phosphate esters bonded to bismuth and two or more additional compounds bonded to bismuth. The first bismuth compound preferably includes a first phosphate ester moiety having one (meth)acryloyl group; another first phosphate ester moiety having two (meth)acryloyl groups; and bismuth to which both of the first phosphate ester moieties are bonded. The first bismuth compound with such a structure tends to be highly compatible with a polymerizable compound.

In the first bismuth compound with such a structure, the molar ratio of the first phosphate ester moiety having two (meth)acryloyl groups to the first phosphate ester moiety having one (meth)acryloyl group is preferably 0.05 to 3, more preferably 0.10 to 2, even more preferably 0.15 to 1.

Preferred examples of the first bismuth compound include compounds represented by Formulas (III), (IV), and (V) below.

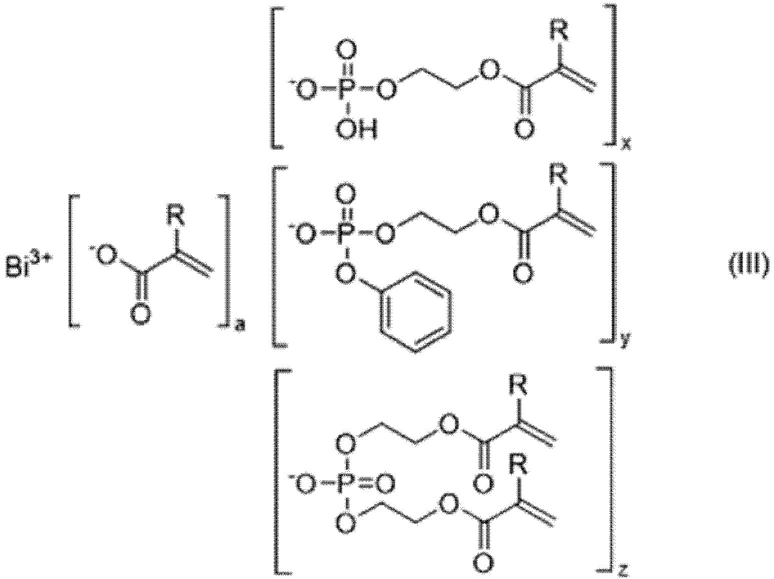

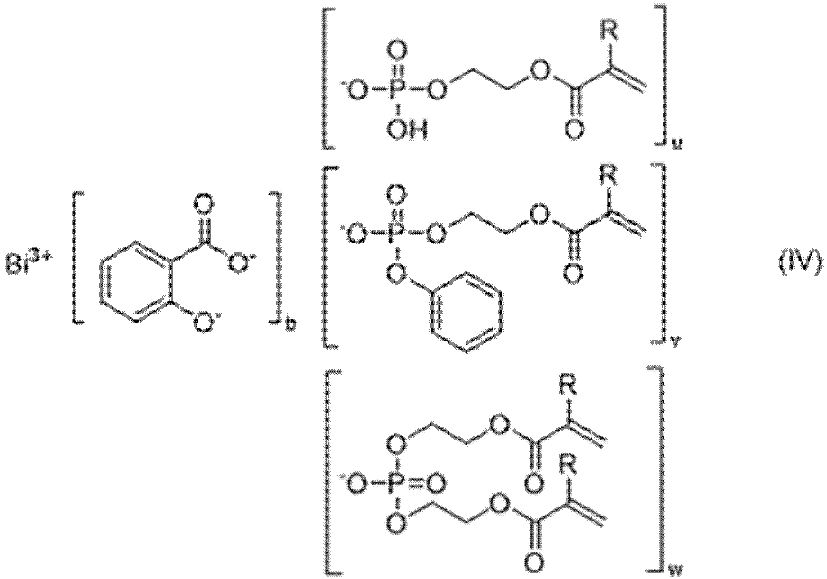

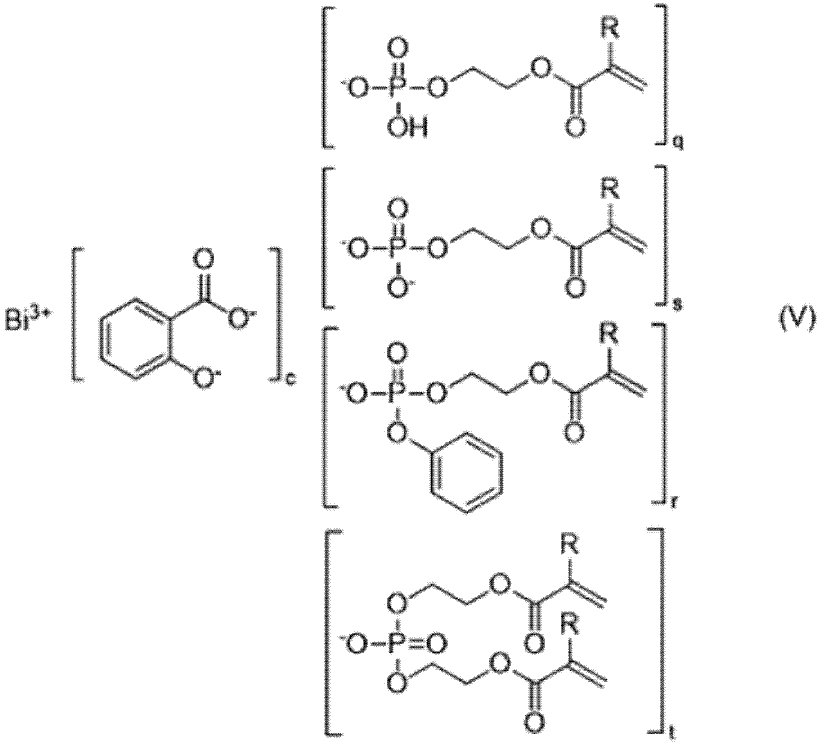

In the formulas, R groups are each independently a hydrogen atom or a methyl group.

In Formula (III), a + x + y + z = 3, x indicates the number of moles of the 2-((meth)acryloyloxy)ethyl hydrogen phosphate residue, y indicates the number of moles of the 2-((meth)acryloyloxy)ethyl phenyl phosphate residue, z indicates the number of moles of the bis[2-((meth)acryloyloxy)ethyl] phosphate residue, and a indicates the number of moles of the (meth)acrylic acid residue.

In Formula (IV), 2b + u + v + w = 3, u indicates the number of moles of the 2-((meth)acryloyloxy)ethyl hydrogen phosphate residue, v indicates the number of moles of the 2-((meth)acryloyloxy)ethyl phenyl phosphate residue, w indicates the number of moles of the bis[2-((meth)acryloyloxy)ethyl] phosphate residue, and b indicates the number of moles of the salicylic acid residue.

In Formula (V), 2c + q + r + 2s + t = 3, q indicates the number of moles of the 2-((meth)acryloyloxy)ethyl hydrogen phosphate residue, r indicates the number of moles of the 2-((meth)acryloyloxy)ethyl phenyl phosphate residue, s indicates the number of moles of the 2-((meth)acryloyloxy)ethyl phosphate residue, t indicates the number of moles of the bis[2-((meth)acryloyloxy)ethyl] phosphate residue, and c indicates the number of moles of the salicylic acid residue.

In this regard, each of Formulas (III) to (V) may represent a mixture of two or more first bismuth compounds rather than a single first bismuth compound. In such a case, the number of moles of each residue defined above indicates the number of moles of each residue in the entire mixture.

For low-temperature production of the first bismuth compound with less coloration, Formula (III) with a = 0 preferably has an x:y:z ratio of 1:0.05-3:0.5-30, more preferably 1:0.1-2:1-20, even more preferably 1:0.15-1:1.5-10. For much less coloration, a may be 0, and y may be 0.

Formula (III) with a being not 0 preferably has an a: (x + y + z) ratio of 0.1-10:1, more preferably 0.1-5:1, even more preferably 0.1-1:1. In this case, the x:y:z ratio is preferably 1:0.05-3:0.5-30, more preferably 1:0.1-2:1-20, even more preferably 1:0.15-1:1.5-10.

When x, y, and z are respectively replaced by u, v, and w, the same description applies to Formula (IV) with b = 0.

In addition, Formula (IV) with b being not 0 preferably has a b: (u + v + w) ratio of 1:0.1-30, more preferably 1:0.2-20, even more preferably 1:0.3-10, furthermore preferably 1:0.5-5. In this case, the u:v:w ratio is preferably 1:0.05-20:0.1-40, more preferably 1:0.1-10:0.2-20, even more preferably 1:0.2-5:0.4-10.

Formula (V) with c = 0 preferably has a q:r:s:t ratio of 1:0.1-50:0.05-20:0.1-40, more preferably 1:0.3-30:0.1-10:0.2-20, even more preferably 1:0.5-20:0.2-5:0.4-10.

Formula (V) with c being not 0 preferably has a c: (q + r + s + t) ratio of 1:0.1-30, more preferably 1:0.2-20, even more preferably 1:0.3-10, furthermore preferably 1:0.5-5. In this case, the q:r:s:t ratio is preferably 1:0.1-50:0.05-20:0.1-40, more preferably 1:0.3-30:0.1-10:0.2-20, even more preferably 1:0.5-20:0.2-5:0.4-10.

The first bismuth compound may be, for example, a phosphate or complex salt represented by Formula (3) below.

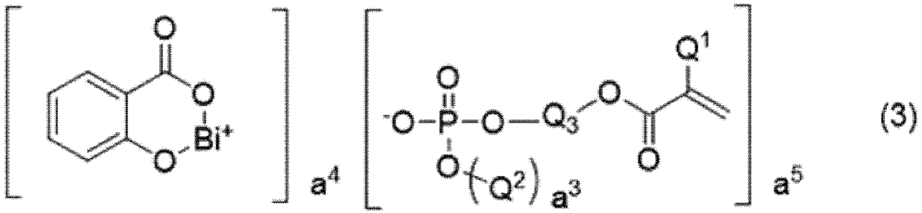

In Formula (3), Q¹, Q², Q³, and a³ are the same as in Formula (2).

In Formula (3), a⁴ is a number of more than 0 and 3 or less, a⁵ is a number of more than 0 and 3 or less, and a⁴ + a⁵ is 3.

The first bismuth compound may also be a composition including the first bismuth compound and an additional compound other than the first bismuth compound. Hereinafter, such a composition will also be referred to as the first bismuth composition. The first bismuth composition may contain a phosphate compound by-product or an unreacted raw material.

Removing the phosphate compound by-product or unreacted raw material from the first bismuth compound will industrially require a large amount of labor. In addition, the phosphate compound by-product or unreacted raw material can contribute to improving the solubility of the first bismuth compound in a radically polymerizable monomer.

Examples of the phosphate compound by-product include dimers of a phosphate ester with one (meth)acryloyl group (phosphoric monoester), dimers of a phosphate ester with two (meth)acryloyl groups (phosphoric diester), and esters between bismuth salicylate or bismuth (meth)acrylate and phosphoric acid.

Examples of the unreacted raw material include a phosphate ester with one (meth)acryloyl group (phosphoric monoester), a phosphate ester with two (meth)acryloyl groups (phosphoric diester), bismuth salicylate, and bismuth (meth)acrylate.

The first bismuth composition may contain, for example, 30 mass% or less of the additional compound other than the first bismuth compound. The content of the additional compound in the first bismuth composition may have no lower limit. The lower limit of the additional compound content may be 0 mass% in an example and may be 5 mass% in another example. The additional compound content can be determined by an internal reference method using ¹H NMR to quantify the phosphate compound by-product and the unreacted raw material in the first bismuth composition.

The first bismuth composition may also contain a compound derived from bismuth oxide. For example, the bismuth oxide-derived compound can be produced by a bonding reaction between bismuth oxide and a (meth)acryloyl group-containing phosphate ester, a (meth)acrylic acid, and/or a salicylic acid. The structure of the bismuth oxide-derived compound may have bonds between the hydroxy group on the bismuth oxide surface and the carboxy group of the phosphate ester, (meth)acrylic acid, or salicylic acid, although it still remains to be clarified. The bismuth oxide-derived compound is very difficult to separate from the first bismuth compound. Thus, when the first bismuth composition as produced contains the bismuth oxide-derived compound as a by-product, it should preferably be used as is. The conditions for the production of the first bismuth composition should preferably be controlled to adjust the amount of the bismuth oxide-derived compound by-product within a range where the first bismuth composition can be prevented from having reduced solubility. The presence of the bismuth oxide-derived compound in the composition can be comprehensively determined from the production conditions or the results of IR, NMR, and XPS measurements.

### [Method for Producing the First Bismuth Compound]

The first bismuth compound may be produced by any suitable method. Preferably, the first bismuth compound is produced by a method including reacting a first phosphate ester with a second bismuth compound. Specifically, the first bismuth compound is preferably produced by a method including: reacting a first phosphate ester and a second bismuth compound in an aliphatic hydrocarbon solvent or an aromatic solvent optionally in the presence of a polymerization inhibitor; and removing water from the reaction system.

The term "second bismuth compound" refers to a bismuth-containing organic compound. The second bismuth compound may include bismuth (meth)acrylate or bismuth subsalicylate. Bismuth (meth)acrylate or bismuth subsalicylate may be any suitable type, such as a commercially available product.

Bismuth subsalicylate is a compound of Formula (VI) below having bismuth bonded to the salicylic acid-derived moiety.

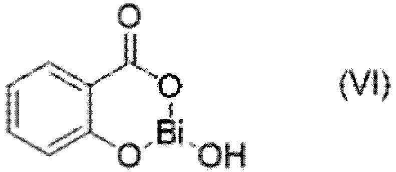

Bismuth subsalicylate may be produced by any suitable method such as a method known in the art.

The first phosphate ester may be a commercially available product. The first phosphate ester may be a phosphate ester having one (meth)acryloyl group, a phosphate ester having two (meth)acryloyl groups, or a mixture of them.

Examples of the phosphate ester having one (meth)acryloyl group include 2-(methacryloyloxy)ethyl dihydrogen phosphate and diphenyl-2-methacryloyloxyethyl phosphate.

Examples of the phosphate ester having two (meth)acryloyl groups include bis[2-(methacryloyloxy)ethyl] hydrogen phosphate and [2-(methacryloyloxy)ethyl] phenyl hydrogen phosphate.

For improved compatibility, the first phosphate ester to be added preferably further includes a phosphate triester, such as diphenyl-2-methacryloyloxyethyl phosphate, bis[2-(methacryloyloxyethyl) phenyl phosphate, or tris[2-(methacryloyloxyethyl) phosphate. Using a phenyl group-containing phosphate triester makes it possible to successfully introduce, into the compounds of Formula (III) to (V), a monovalent phenyl phosphate diester having one (meth)acryloyl group.

The phosphate triester is preferably used in an amount of 0.1 to 20 moles, more preferably 0.2 to 5 moles, relative to 1 mole of the total amount of the phosphate ester having one (meth)acryloyl group and the phosphate ester having two (meth)acryloyl groups.

The amount of the first phosphate ester to be reacted may be determined such that the desired first bismuth compound can be obtained. Specifically, 1 mole of the second bismuth compound is preferably reacted with 0.3 to 10 moles of the first phosphate ester.

### (Aliphatic Hydrocarbon Solvent or Aromatic Solvent)

In an embodiment, the second bismuth compound and the first phosphate ester are preferably mixed and stirred in an aliphatic hydrocarbon solvent or an aromatic solvent for the reaction between them. During the process, water produced in the reaction system is preferably removed therefrom. For easy removal of the produced water, the aliphatic hydrocarbon solvent or the aromatic solvent preferably has a high boiling point, specifically a boiling point of 100°C or more. A mixed solution including a mixture of the aliphatic hydrocarbon solvent and the aromatic solvent may also be used.

Examples of the aliphatic hydrocarbon solvent and the aromatic solvent include hexane, heptane, nonane, decane, undecane, dodecane, xylene, dimethoxybenzene, and isomers thereof; and benzene, toluene, chlorobenzene, bromobenzene, anisole; petroleum ether, petroleum benzine, and benzoin.

The aliphatic hydrocarbon solvent or the aromatic solvent may be used in any amount sufficient to form a mixture including the second bismuth compound and the first phosphate ester. For high productivity of the first bismuth compound, 5 to 100 mL of the aliphatic hydrocarbon solvent or aromatic solvent is preferably used per 1 g of the second bismuth compound.

### (Reaction Conditions)

Any appropriate method may be used to introduce the second bismuth compound and the first phosphate ester into the reaction system. For example, a method includes adding together the second bismuth compound, optionally diluted with an aliphatic hydrocarbon solvent or aromatic solvent, and the first phosphate ester, optionally diluted with an aliphatic hydrocarbon solvent or aromatic solvent, to the reaction system; and mixing and stirring them. Another method includes preliminarily introducing an aliphatic hydrocarbon solvent or aromatic solvent into the reaction system; then adding together the second bismuth compound, optionally diluted with an aliphatic hydrocarbon solvent or aromatic solvent, and the first phosphate ester, optionally diluted with an aliphatic hydrocarbon solvent or aromatic solvent, to the reaction system; and stirring and mixing them. A further method includes preliminarily introducing one of the materials into the reaction system; then introducing the other material into the reaction system; and stirring and mixing them. In particular, the first bismuth compound is preferably produced using the method described below so that it can be produced with improved productivity and less coloration. First, the second bismuth compound is dispersed in an aliphatic hydrocarbon solvent or aromatic solvent. If the second bismuth compound is insoluble in the solvent in this step, any agglomerates of the second bismuth compound should preferably be crushed using an ultrasonic device or any other device so that no agglomerates remain. To the resulting cloudy solution containing the dispersed second bismuth compound is added the first phosphate ester, and stirring and heating are started.

The materials may be stirred at a temperature (reaction temperature) corresponding to the temperature of reflux of the aliphatic hydrocarbon solvent or aromatic solvent. To produce the first bismuth compound with much less coloration, the materials are preferably stirred at an oil bath temperature of 30 to 150°C, more preferably 40 to 140°C, even more preferably 45 to 120°C.

At a reaction temperature of 30 to 110°C, the reaction system is preferably maintained at a reduced pressure so that the water produced can be removed from the reaction system (dewatering conditions). During this process, the second bismuth compound and the first phosphate ester may be mixed while water is removed, or they may be mixed and then subjected to removal of water. For efficient reaction, they are preferably mixed and then subjected to removal of water during the reaction.

They may be reacted for any suitable period of time. In general, they may be reacted for 1 hour or more and 6 hours or less.

In view of operation, they may be reacted in any of an air atmosphere, an inert gas atmosphere, or a dry air atmosphere. For ease of operation, they are preferably reacted in an air atmosphere.

After the completion of the reaction under the conditions described above, the resulting first bismuth compound is preferably concentrated by removal of the solvent and then subjected to separation of insoluble turbidity components, if any, by filtration or centrifugation. The concentrated reaction solution resulting from this process is then subjected to reprecipitation and purification through adding, to the solution, a solvent that is soluble in the reaction solvent and will not dissolve the first bismuth compound. If a high-boiling point solvent remains, it may be replaced with the precipitation solvent through repeated decantation for the purification. The remaining solvent may then be removed by distillation, which may be followed by vacuum drying to yield the first bismuth compound.

The composition according to an embodiment typically has a first bismuth compound content of 80.0 mass% or more and 99.8 mass% or less. The curable composition having a higher first bismuth compound content tends to produce a cured product with a higher ability to shield radiation. The content of the first bismuth compound in the composition is preferably 85 mass% or more, more preferably 90 mass% or more, even more preferably 95 mass% or more. With too high a first bismuth compound content, however, the cured product may have increased odor. The content of the first bismuth compound in the composition is preferably 99.5 mass% or less.

### <Terpene>

The term "terpene" includes terpenes and their derivatives. Terpenes are hydrocarbons composed of isoprene units.

In the composition, the terpene may include at least one compound selected from the group consisting of a semiterpene, a semiterpene derivative, a monoterpene, a monoterpene derivative, a sesquiterpene, and a sesquiterpene derivative. The terpene preferably includes at least one compound selected from the group consisting of a monoterpene, a monoterpene derivative, a sesquiterpene, and a sesquiterpene derivative, and more preferably includes at least one compound selected from the group consisting of a monoterpene and a monoterpene derivative. Each of the derivatives may have a functional group, such as a hydroxy group or a carbonyl group.

The terpene preferably includes at least one compound selected from the group consisting of a monocyclic monoterpene, a monocyclic monoterpene derivative, a bicyclic monoterpene, and a bicyclic monoterpene derivative. The composition containing one or more of these monoterpenes according to an embodiment will tend to form a curable composition capable of producing a cured product with much less odor.

Examples of the terpene include (-)-α-pinene, (-)-β-pinene, (±)-camphene, α-terpinene, limonene, phenetole, p-cymene, terpinolene, 1,8-cineole, linalool, (+)-camphor, l-menthol, d-menthol, 1,4-cineole, nopinene, α-phellandrene, fenchone, borneol, and citronellol.

The terpene preferably includes at least one selected from the group consisting of (-)-α-pinene, (-)-β-pinene, (±)-camphene, α-methyl styrene, α-terpinene, limonene, phenetole, p-cymene, terpinolene, 1,8-cineole, linalool, (+)-camphor, and l-menthol, and more preferably includes at least one selected from the group consisting of (-)-α-pinene, (-)-β-pinene, (±)-camphene, α-methyl styrene, limonene, phenetole, p-cymene, linalool, and (+)-camphor.

The terpene preferably has a boiling point at 1 atm of 95°C or more and 250°C or less. The composition containing the terpene with a boiling point within this range according to an embodiment can form a curable composition capable of producing a cured product with much less odor. The terpene more preferably has a boiling point of 100°C or more and 220°C or less, even more preferably 150°C or more and 210°C or less. The boiling point of the terpene can be measured using, for example, a boiling point meter.

The composition according to an embodiment preferably has a ratio M1/M2 of the mass M1 of the first bismuth compound to the mass M2 of the terpene of 4 or more and 4990 or less. With a higher M1/M2 ratio, the composition according to an embodiment will tend to form a curable composition capable of producing a cured product with a higher ability to shield radiation. With a lower M1/M2 ratio, the composition according to an embodiment will tend to form a curable composition capable of producing a cured product with less odor. The ratio M1/M2 is more preferably 15 or more and 300 or less, even more preferably 20 or more and 100 or less. The ratio M1/M2 may also be 10 or more and 700 or less.

With a higher terpene content, the composition according to an embodiment will tend to form a curable composition capable of more easily producing a cured product with less odor. The terpene content of the composition is preferably 0.1 mass% or more, more preferably 0.5 mass% or more, even more preferably 1.0 mass% or more. With too high a terpene content, however, the composition according to an embodiment may form a curable composition that may produce a cured product with a reduced ability to shield radiation. The terpene content of the composition is preferably 8 mass% or less, more preferably 7 mass% or less, even more preferably 5 mass% or less. The content of each of the components in the composition can be measured using, for example, ¹H NMR spectroscopy.

### <Azeotropic Compound>

The azeotropic compound is azeotropic with phenol. Examples of the azeotropic compound include (-)-α-pinene (azeotropic point: 152.75°C), (-)-β-pinene (azeotropic point: 159.00°C), (±)-camphene (azeotropic point: 156.10°C), α-terpinene (azeotropic point: 166.70°C), limonene (azeotropic point: 169.00°C), p-cymene (azeotropic point: 170.50°C), terpinolene (azeotropic point: 173.00°C), and cineole (azeotropic point: 182.85°C).

The azeotropic compound preferably includes at least one compound selected from the group consisting of (-)-α-pinene, (-)-β-pinene, (±)-camphene, α-terpinene, limonene, and p-cymene.

The composition according to an embodiment preferably has a ratio M1/M12 of the mass M1 of the first bismuth compound to the mass M12 of the azeotropic compound of 4 or more and 4990 or less, more preferably 5 or more and 700 or less. With a higher M1/M12 ratio, the composition according to an embodiment will tend to form a curable composition capable of producing a cured product with a higher ability to shield radiation. With a lower M1/M12 ratio, the composition according to an embodiment will tend to form a curable composition capable of producing a cured product with less odor. The ratio M1/M12 is more preferably 15 or more and 300 or less, even more preferably 20 or more and 100 or less.

With a higher azeotropic compound content, the composition according to an embodiment will tend to form a curable composition capable of more easily producing a cured product with less odor. The azeotropic compound content of the composition is preferably 0.1 mass% or more, more preferably 0.5 mass% or more, even more preferably 1.0 mass% or more. With too high an azeotropic compound content, however, the composition according to an embodiment may form a curable composition that may produce a cured product with a reduced ability to shield radiation. The azeotropic compound content of the composition is preferably 8 mass% or less, more preferably 7 mass% or less, even more preferably 5 mass% or less. The content of each of the components in the composition can be measured using, for example, ¹H NMR spectroscopy.

### <Coordinating Organic Compound>

The composition according to an embodiment preferably further includes a coordinating organic compound having an acid dissociation constant pKa of 1.5 or more. The coordinating organic compound is capable of coordinating with bismuth. The coordinating organic compound can preferentially coordinate with bismuth rather than impurities. Thus, the composition containing the coordinating organic compound can have a lower content of molecules of the first bismuth compound with which the impurities coordinate. Therefore, the composition containing the coordinating organic compound will tend to form a curable composition capable of producing a cured product with much less odor.

The acid dissociation constant pKa refers to that in water. For example, the acid dissociation constant pKa can be determined by titration experiments or calculated by assuming state conditions. Specifically, the acid dissociation constant pKa is the result of calculation using Software V11.02 (ACD/Labs) shown in SciFinder-n. For unified calculation of the physical property indicator, each compound was assumed to be in water.

The coordinating organic compound preferably has an acid dissociation constant pKa of 2.0 or more and 15.0 or less. The coordinating organic compound with an acid dissociation constant pKa within this range according to an embodiment will tend form a curable composition capable of producing a cured product with a low yellowness index. The coordinating organic compound may have an acid dissociation constant pKa of 3 or more, 4 or more, or 6 or more. The coordinating organic compound may have an acid dissociation constant pKa of 14 or less, 11 or less, or 10 or less.

The coordinating organic compound preferably has a molecular weight (relative molecular mass) of 17 or more and 400 or less. The coordinating organic compound with a molecular weight within this range would easily coordinate with bismuth. The coordinating organic compound more preferably has a molecular weight of 18 or more and 300 or less, even more preferably 28 or more and 200 or less.

The coordinating organic compound preferably has a boiling point at 1 atm of 20°C or more and 500°C or less. The coordinating organic compound with a boiling point within this range according to an embodiment will tend to form a curable composition capable of producing a cured product with much less odor. The coordinating organic compound more preferably has a boiling point of 30°C or more and 400°C or less, even more preferably 120°C or more and 360°C or less.

The composition according to an embodiment preferably has a ratio M1/M11 of the mass M1 of the first bismuth compound to the mass M11 of the coordinating organic compound of 4 or more and 4990 or less, more preferably 5 or more and 700 or less. With a higher M1/M11 ratio, the composition according to an embodiment will tend to form a curable composition capable of producing a cured product with a higher ability to shield radiation. With a lower M1/M11 ratio, the composition will tend to form a curable composition capable of producing a cured product with less odor. The ratio M1/M11 is more preferably 7 or more and 300 or less, even more preferably 10 or more and 100 or less.

The composition according to an embodiment preferably has a ratio M2/M11 of the mass M2 of the terpene to the mass M11 of the coordinating organic compound of 0.01 or more and 100 or less. The ratio M2/M11 is more preferably 0.1 or more and 10 or less, even more preferably 0.3 or more and 5 or less.

The composition according to an embodiment preferably has a ratio M12/M11 of the mass M12 of the azeotropic compound to the mass M11 of the coordinating organic compound of 0.01 or more and 100 or less. The M12/M11 ratio is more preferably 0.1 or more and 10 or less, even more preferably 0.3 or more and 5 or less. These ratios can be determined using, for example, ¹H NMR spectroscopy.

With a higher coordinating organic compound content, the composition according to an embodiment will tend to form a curable composition capable of more easily producing a cured product with less odor. The content of the coordinating organic compound in the composition is preferably 0.1 mass% or more, more preferably 0.5 mass% or more, even more preferably 1.0 mass% or more. With too high a coordinating organic compound content, however, the composition according to an embodiment may form a curable composition that may produce a cured product with a reduced ability to shield radiation. The content of the coordinating organic compound in the composition is preferably 8 mass% or less, more preferably 7 mass% or less, even more preferably 5 mass% or less.

For example, the coordinating organic compound may include at least one, preferably two or more, selected from the group consisting of an imidazole skeleton-containing compound, a pyrazole skeleton-containing compound, a triazole skeleton-containing compound, a tetrazole skeleton-containing compound, a compound having an unsaturated bond and at least one heteroatom selected from the group consisting of nitrogen, oxygen, and sulfur, an unsaturated dicarboxylic acid, an unsaturated carboxylic acid ester, and an unsaturated carboxylic acid anhydride.

The coordinating organic compound preferably includes at least one selected from the group consisting of an imidazole skeleton-containing compound, a pyrazole skeleton-containing compound, a triazole skeleton-containing compound, and a tetrazole skeleton-containing compound.

The imidazole skeleton-containing compound has a skeleton represented by Formula (a) below.

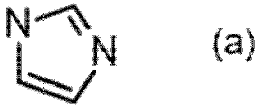

Examples of the imidazole skeleton-containing compound include imidazole, 1-vinylimidazole, 1-allylimidazole, N-acetylimidazole, benzimidazole, 1-methylimidazole, 1-ethylimidazole, 1-propylimidazole, 1-cyanomethylimidazole, 1-(3-aminopropyl)imidazole, 2-methylimidazole, 2-methyl-1-vinylimidazole, 2-hydroxymethy-l-methylimidazole, 4-hydroxymethyl-5-methylimidazole, 2-formyl-1-vinylimidazole, 2-ethylimidazole, 2-propylimidazole, 2-chloroimidazole, 2-nitroimidazole, 4-nitroimidazole, 4-methylimidazole, 4-fluoroimidazole, 2-formylimidazole, 2-ethyl-4-imidazole, 4-formylimidazole, 4-ethylimidazole, 4-cyanomethylimidazole, 2-imidazolecarboxylic acid, 4-imidazolecarboxylic acid, 1-isopropylimidazole, 2-isopropylimidazole, and 1,2-dimethylimidazole. The imidazole skeleton-containing compound preferably includes at least one compound selected from the group consisting of imidazole, 1-vinylimidazole, 1-allylimidazole, 2-methylimidazole, N-acetylimidazole, trimethylsilylimidazole, and 1,2-dimethylimidazole, and more preferably includes imidazole.

The pyrazole skeleton-containing compound has a skeleton represented by Formula (b) below.

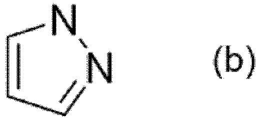

Examples of the pyrazole skeleton-containing compound include pyrazole, 1-methylpyrazole, 1-ethylpyrazole, 1-isopropylpyrazole, 1-nitropyrazole, 3-methylpyrazole, 3-aminopyrazole, 3-nitropyrazole, 4-methylpyrazole, 4-aminopyrazole, 4-chloropyrazole, 4-nitropyrazole, 3-amino-1-methylpyrazole, 3-amino-5-methylpyrazole, 3-amino-5-hydroxypyrazole, 5-amino-1-methylpyrazole, 5-hydroxy-1-methylpyrazole, 1,2-dihydropyrazole-3-one, 3-formylpyrazole, 1,3-dimethylpyrazole, 1,5-dimethylpyrazole, 3,5-dimethylpyrazole, 3-amino-4-cyanopyrazole, 4-formyl-1-methylpyrazole, 1,3,5-trimethylpyrazole, 5-amino-1,3-dimethylpyrazole, 5-amino-1-ethylpyrazole, pyrazole-4-carboxylic acid, pyrazole-3-carboxylic acid, and 5-(hydroxymethyl)-1-methylpyrazole. The pyrazole skeleton-containing compound preferably includes pyrazole.

The term "triazole skeleton-containing compound" includes compounds having a 1,2,3-triazole skeleton and compounds having a 1,2,4-triazole skeleton.

The compound having a 1,2,3-triazole skeleton has a skeleton represented by Formula (c) below.

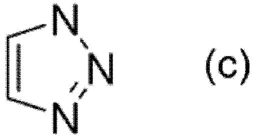

Examples of the compound having a 1,2,3-triazole skeleton include 1,2,3-triazole, 1H-benzotriazole, and 2H-benzotriazole. The compound having a 1,2,3-triazole skeleton preferably includes 1,2,3-triazole.

The compound having a 1,2,4-triazole skeleton has a skeleton represented by Formula (d) below.

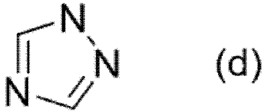

Examples of the compound having a 1,2,4-triazole skeleton include 1,2,4-triazole, 3-methyl-1H-1,2,4-triazole, 3-amino-1,2,4-triazole, 4-amino-1,2,4-triazole, 1-hydroxymethyl-1,2,4-triazole, 3,5-dimethyl-1,2,4-triazole, 3,5-amino-1,2,4-triazole, and methyl 1,2,4-triazole-3-carboxylate. The compound having a 1,2,4-triazole skeleton preferably includes 1,2,4-triazole.

The tetrazole skeleton-containing compound has a skeleton represented by Formula (e) below.

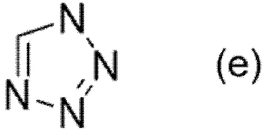

Examples of the tetrazole skeleton-containing compound include tetrazole, 1-methyl-1H-tetrazole, 5-methyltetrazole, 5-amino-1H-tetrazole, 5-amino-1-methyltetrazole, and 5-(2-pyridyl)-1H-tetrazole. The tetrazole skeleton-containing compound preferably includes tetrazole.

For example, the coordinating organic compound may include a compound having an unsaturated bond and at least one heteroatom selected from the group consisting of nitrogen, oxygen, and sulfur. This type of coordinating organic compound typically has 1 or more and 5 or less heteroatoms, preferably one or two heteroatoms. Examples of this type of coordinating organic compound include imidazole skeleton-containing compounds listed above, allyl isonicotinate, 2-dimethylaminoethyl acrylate, 2-dimethylaminoethyl methacrylate, indole, carbazole, 1,2-benzoisothiazol-3(2H)-one, heliotropin, allyl cyanurate, triallyl isocyanurate, triallylamine, 2-(tert-butylamino)ethyl acrylate, and 2-(tert-butylamino)ethyl methacrylate.

For example, the coordinating organic compound may include an unsaturated dicarboxylic acid. Examples of the unsaturated dicarboxylic acid include maleic acid, fumaric acid, citraconic acid, mesaconic acid, 2-pentenedioic acid, methylene succinic acid, allylmalonic acid, isopropylidene succinic acid, 2,4-hexadienedioic acid, and acetylene dicarboxylic acid. The unsaturated dicarboxylic acid preferably includes maleic acid.

For example, the coordinating organic compound may include an unsaturated carboxylic acid ester. Examples of the unsaturated carboxylic acid ester include 2-dimethylaminoethyl acrylate, 2-dimethylaminoethyl methacrylate, and diallyl maleate. The unsaturated carboxylic acid ester preferably includes at least one compound selected from the group consisting of 2-dimethylaminoethyl acrylate and 2-dimethylaminoethyl methacrylate.

For example, the coordinating organic compound may include an unsaturated carboxylic acid anhydride. Examples of the unsaturated carboxylic acid anhydride include acrylic anhydride, methacrylic anhydride, and maleic anhydride.

Preferred examples of the coordinating organic compound include at least one compound selected from the group consisting of imidazole, 1-vinylimidazole, 1-allylimidazole, N-acetylimidazole, trimethylsilylimidazole, pyrazole, triazole, 1H-tetrazole, 1,2,3-benzotriazole, benzimidazole, allyl isonicotinate, 2-dimethylaminoethyl acrylate, 2-dimethylaminoethyl methacrylate, 2-[2-hydroxy-5-[2-(methacryloyloxy)ethyl]phenyl]-2H-benzotriazole, indole, carbazole, 2-methylimidazole, 4-methylimidazole, 1,2-benzoisothiazol-3(2H)-one, 2-isopropylimidazole, 1,2-dimethylimidazole, l-menthol, heliotropin, triallyl cyanurate, triallyl isocyanurate, triallylamine, 2-(tert-butylamino)ethyl acrylate, 2-(tert-butylamino)ethyl methacrylate, 4-acryloylmorpholine, triacryloylhexahydrotriazine, dimethylpyrazole, linalool, camphor, acrylic acid, methacrylic acid, maleic acid, acrylic anhydride, methacrylic anhydride, and maleic anhydride.

The coordinating organic compound preferably includes at least one compound selected from the group consisting of imidazole, 2-methylimidazole, 1-vinylimidazole, 2-dimethylaminoethyl acrylate, 2-dimethylaminoethyl methacrylate, triallylamine, and maleic anhydride.

In this regard, the carboxylic acid anhydride may be used as a precursor of the carboxylic acid. The acid dissociation constant pKa of the carboxylic acid anhydride may be assumed to be that of the corresponding carboxylic acid.

The coordinating organic compound preferably includes a first coordinating organic compound and a second coordinating organic compound different from the first coordinating organic compound. The composition containing two or more different coordinating organic compounds can have further reduced odor due to the synergistic effect of the coordinating organic compounds.

The coordinating organic compound preferably includes: an imidazole skeleton-containing compound; and at least one compound selected from the group consisting of a pyrazole skeleton-containing compound, a triazole skeleton-containing compound, a tetrazole skeleton-containing compound, a compound having an unsaturated bond and at least one heteroatom selected from the group consisting of nitrogen, oxygen, and sulfur, an unsaturated dicarboxylic acid, an unsaturated carboxylic acid ester, and an unsaturated carboxylic acid anhydride. The composition containing the imidazole skeleton-containing compound according to an embodiment will tend to form a curable composition having low viscosity and high handleability.

The mixture of two or more coordinating organic compounds preferably has an imidazole skeleton-containing compound content of 10 mass% or more, more preferably 25 mass% or more, even more preferably 40 mass% or more. The imidazole skeleton-containing compound content may be 90 mass% or less in an example and may be 60 mass% or less in another example.

The coordinating organic compound preferably includes: an unsaturated carboxylic acid anhydride; and at least one compound selected from the group consisting of an imidazole skeleton-containing compound, a pyrazole skeleton-containing compound, a triazole skeleton-containing compound, a tetrazole skeleton-containing compound, a compound having an unsaturated bond and at least one heteroatom selected from the group consisting of nitrogen, oxygen, and sulfur, an unsaturated dicarboxylic acid, and an unsaturated carboxylic acid ester. The unsaturated carboxylic acid anhydride will tend to provide an increased water absorption capacity.

The mixture of two or more coordinating organic compounds preferably has an unsaturated carboxylic acid anhydride content of 10 mass% or more, more preferably 25 mass% or more, even more preferably 40 mass% or more. The unsaturated carboxylic acid anhydride content may be 90 mass% or less in an example and may be 60 mass% or less in another example.

The coordinating organic compound preferably includes both an imidazole skeleton-containing compound and an unsaturated carboxylic acid anhydride. The coordinating organic compound may only include an imidazole skeleton-containing compound and an unsaturated carboxylic acid anhydride or may further include an additional coordinating organic compound in addition to them.

### <Method for Preparing the Composition>

The composition according to an embodiment may be prepared, for example, by mixing the first bismuth compound and the terpene or the azeotropic compound and optionally the coordinating organic compound.

### <<Curable Composition>>

An embodiment is directed to a curable composition including: the composition according to an embodiment described above; and a first polymerizable compound. In other words, an embodiment is directed to a curable composition including: the first bismuth compound; the terpene or the azeotropic compound; and a first polymerizable compound; and optionally the coordinating organic compound. The first polymerizable compound has at least one polymerizable group selected from the group consisting of an acryloyl group, a methacryloyl group, a vinyl group, and an allyl group.

For example, the curable composition according to an embodiment may have a first bismuth compound content of 10 mass% or more and 90 mass% or less. With a higher first bismuth compound content, the curable composition will tend to produce a cured product with a higher ability to shield radiation. The content of the first bismuth compound in the curable composition is preferably 25 mass% or more, more preferably 30 mass% or more, even more preferably 40 mass% or more. With too high a first bismuth compound content, however, the curable composition may tend to produce a cured product with increased odor. The content of the first bismuth compound in the curable composition is preferably 80 mass% or less.

With a higher terpene content, the curable composition according to an embodiment will tend to more easily produce a cured product with less odor. The content of the terpene in the curable composition is preferably 0.1 mass% or more, more preferably 0.5 mass% or more, even more preferably 1.0 mass% or more. With too high a terpene content, however, the curable composition may produce a cured product with a reduced ability to shield radiation. The content of the terpene in the curable composition is preferably 8 mass% or less, more preferably 7 mass% or less, even more preferably 5 mass% or less.

With a higher azeotropic compound content, the curable composition according to an embodiment will tend to more easily produce a cured product with less odor. The content of the azeotropic compound in the curable composition is preferably 0.1 mass% or more, more preferably 0.5 mass% or more, even more preferably 1.0 mass% or more. With too high an azeotropic compound content, however, the curable composition may produce a cured product with a reduced ability to shield radiation. The content of the azeotropic compound in the curable composition is preferably 8 mass% or less, more preferably 7 mass% or less, even more preferably 5 mass% or less.

With a higher coordinating organic compound content, the curable composition according to an embodiment will tend to more easily produce a cured product with less odor. The content of the coordinating organic compound in the curable composition is preferably 0.1 mass% or more, more preferably 0.5 mass% or more, even more preferably 1.0 mass% or more. With too high a coordinating organic compound content, however, the curable composition may produce a cured product with a reduced ability to shield radiation. The content of the coordinating organic compound in the curable composition is preferably 8 mass% or less, more preferably 7 mass% or less, even more preferably 5 mass% or less. The component content can be measured using, for example, ¹H NMR spectroscopy.

### <First Polymerizable Compound>

The first polymerizable compound has at least one polymerizable group selected from the group consisting of an acryloyl group, a methacryloyl group, a vinyl group, and an allyl group.

The first polymerizable compound preferably has a boiling point at 1 atm of 90°C or more. When the first polymerizable compound has a high boiling point, the curable composition will tend to produce a cured product with reduced odor. The first polymerizable compound preferably has a boiling point of 100°C or more, more preferably 140°C or more. The boiling point of the first polymerizable compound may have any upper limit. The upper limit of the boiling point may be 200°C or less in an example and may be 300°C or less in another example. The boiling point of the first polymerizable compound can be measured using, for example, thermogravimetric (TG) analysis. TG analysis can be performed using a simultaneous thermogravimetric-differential thermal analyzer (TG8120 manufactured by Rigaku), in which scanning may be performed under an air stream at a rate of temperature rise of 10°C/minute in a temperature range of room temperature to 500°C.

The content of the first polymerizable compound in the curable composition according to an embodiment may be, for example, 10 mass% or more and 80 mass% or less. The first polymerizable compound content can be measured using, for example, ¹H NMR spectroscopy.

The first polymerizable compound preferably includes a monofunctional radically polymerizable compound having one radically polymerizable moiety per molecule. The curable composition containing a monofunctional radically polymerizable compound will tend to provide increased compatibility for the first bismuth compound. The monofunctional radically polymerizable compound preferably has a boiling point at 1 atm of 150°C or more, more preferably 180°C or more.

Examples of the first polymerizable compound having an acryloyl group include acrylic acid, acrylamide, phenyl acrylate, benzyl acrylate, isobutyl acrylate, methoxyethyl acrylate, ethoxyethyl acrylate, tetrahydrofurfuryl acrylate, isocyanatoethyl acrylate, acryloxymethyltrimethoxysilane, and various other commercially available monofunctional radically polymerizable compounds.

Examples of the first polymerizable compound having a methacryloyl group include methacrylic acid, methacrylamide, phenyl methacrylate, benzyl methacrylate, isobutyl methacrylate, methoxyethyl methacrylate, ethoxyethyl methacrylate, methacryloxymethyltrimethoxysilane, and various other commercially available monofunctional radically polymerizable compounds.

Examples of the first polymerizable compound having a vinyl group include vinyl pyridine, vinyl pyrrolidone, methyl styrene and its structural isomers, methyl styrene dimers, chlorostyrene, bromostyrene, divinylbenzene, and various other commercially available monofunctional radically polymerizable monomers.

Examples of the first polymerizable compound having an allyl group include allyl methyl carbonate, allyl phenyl ether, 4-allyloxytoluene, allyloxytrimethylsilane, allyl benzoate, allyl methacrylate, allyl glycidyl ether, and various other commercially available monofunctional radically polymerizable monomers.

In particular, for good optical properties and impact resistance of the cured product, the monofunctional radically polymerizable compound is preferably a (meth)acrylate represented by Formula (I) below.

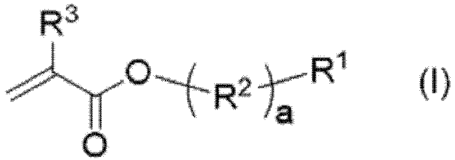

In Formula (I), R¹ is a hydroxy group, a linear or branched alkyl group having 1 or more and 10 or less carbon atoms, a linear or branched alkoxy group having 1 or more and 10 or less carbon atoms, a cycloalkyl group having 4 or more and 10 or less carbon atoms, a heterocycloalkyl group having 3 or more and 10 or less carbon atoms and having 1 or more and 3 or less heteroatoms, an aryl group having 4 or more and 10 or less carbon atoms, or a heteroaryl group having 3 or more and 10 or less carbon atoms and having 1 or more and 3 or less heteroatoms.

R¹ is preferably a linear or branched alkyl group having 1 or more and 10 or less carbon atoms, a linear or branched alkoxy group having 1 or more and 10 or less carbon atoms, or a heterocycloalkyl group having 3 or more and 10 or less carbon atoms and having 1 or more and 3 or less carbon atoms, more preferably a linear or branched alkoxy group having 1 or more and 10 or less carbon atoms or a heterocycloalkyl group having 3 or more and 10 or less carbon atoms and having 1 or more and 3 or less carbon atoms, and even more preferably a methoxy group or a tetrahydrofuryl group.

In Formula (I), R² is a linear or branched alkylene group having 1 or more and 10 or less carbon atoms or an alkylene oxide group having 1 or more and 10 or less carbon atoms.

R² is preferably a linear or branched alkylene group having 1 or more and 10 or less carbon atoms and more preferably a methylene or ethylene group.

In Formula (I), R³ is a hydrogen atom or a methyl group.

In Formula (I), a is 0 or 1. In Formula (I), a is preferably 1.

Examples of the (meth)acrylate represented by Formula (I) include at least one selected from the group consisting of methoxyethyl acrylate (MEMA), ethoxyethyl acrylate, methoxyethyl methacrylate, ethoxyethyl methacrylate, tetrahydrofurfuryl acrylate (THFAA), and tetrahydrofurfuryl methacrylate (THFMA).

The curable composition according to an embodiment preferably has a monofunctional radically polymerizable compound content of 10 mass% or more and 80 mass% or less. With a higher monofunctional radically polymerizable compound content, the curable composition will tend to provide higher compatibility for the first bismuth compound. With a lower monofunctional radically polymerizable compound content, the curable composition will tend to produce a cured product with a lower level of odor and higher impact resistance. The monofunctional radically polymerizable compound content is preferably 10 mass% or more and 30 mass% or less. The monofunctional radically polymerizable compound content can be measured using, for example, NMR spectroscopy.

The curable composition according to an embodiment preferably contains two or more monofunctional radically polymerizable compounds. The curable composition containing two or more monofunctional radically polymerizable compounds will tend to provide increased compatibility for the first bismuth compound. The curable composition according to an embodiment may contain a monofunctional radically polymerizable compound having a (meth)acryloyl group and a monofunctional radically polymerizable compound having a vinyl group. The curable composition typically has a ratio M4/M5 of the mass M4 of the monofunctional radically polymerizable compound having a (meth)acryloyl group to the mass M5 of the monofunctional radically polymerizable compound having a vinyl group of 0.1 or more and 10 or less, preferably 1 or more and 5 or less.

The curable composition according to an embodiment preferably contains two or more (meth)acrylates each represented by Formula (I) and more preferably contains at least one of a (meth)acrylate of Formula (I) with R¹ being a tetrahydrofuryl group or a (meth)acrylate of Formula (I) with R¹ being a methoxy group. The curable composition containing a (meth)acrylate of Formula (I) with R¹ being a tetrahydrofuryl group will tend to provide increased compatibility for the first bismuth compound. The curable composition containing a (meth)acrylate of Formula (I) with R¹ being a methoxy group will tend to produce a cured product with increased hardness. In particular, the curable composition more preferably contains a (meth)acrylate of Formula (I) with R¹ being a methoxy group. In the curable composition, the ratio M6/M7 of the mass M6 of the (meth)acrylate of Formula (I) with R¹ being a methoxy group to the mass M7 of the (meth)acrylate of Formula (I) with R¹ being a tetrahydrofuryl group is preferably 0.1 or more and 10 or less. The curable composition having an M6/M7 ratio within this range will provide increased compatibility for the first bismuth compound and produce a cured product with increased hardness. The M6/M7 ratio is more preferably 0.3 or more and 5 or less, even more preferably 0.5 or more and 3 or less.

The curable composition preferably has a ratio M1/M10 of the mass M1 of the first bismuth compound to the mass M10 of the monofunctional radically polymerizable compound of 0.25 or more and 100 or less. With a higher M1/M10 ratio, the curable composition will tend to produce a cured product with a higher ability to shield radiation. With a lower M1/M10 ratio, the curable composition will provide higher compatibility for the first bismuth compound. The M1/M10 ratio is more preferably 1 or more and 6 or less.

The first polymerizable compound preferably includes a polyfunctional radically polymerizable compound having two or more radically polymerizable moieties per molecule. The curable composition containing a polyfunctional radically polymerizable compound can produce a cured product having higher mechanical properties, such as higher impact resistance. The polyfunctional radically polymerizable compound may be any commercially available type. The polyfunctional radically polymerizable compound preferably has a boiling point at 1 atm of 100°C or more, more preferably 140°C or more.

In view of solubility, composition viscosity, and cured product impact resistance, the polyfunctional radically polymerizable compound is preferably a di(meth)acrylate represented by Formula (II) below.

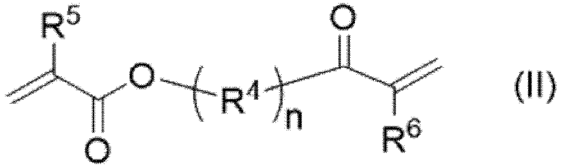

In Formula (II), R⁴ is a linear or branched alkylene group having 1 or more and 10 or less carbon atoms or a linear or branched alkylene oxide group having 1 or more and 10 or less carbon atoms.

R⁴ is preferably a linear or branched alkylene oxide group having 1 or more and 10 or less carbon atoms, more preferably an ethylene oxide group.

In Formula (II), R⁵ and R⁶ are each independently a hydrogen atom or a methyl group.

In Formula (II), n is 1 or more and 50 or less. In Formula (II), n is preferably a number of 3 or more and 30 or less.

Examples of the di(meth)acrylate represented by Formula (II) include a bifunctional (meth)acrylate selected from the group consisting of polyethylene glycol dimethacrylate, polyethylene glycol diacrylate, polypropylene glycol dimethacrylate, polypropylene glycol diacrylate, polytetramethylene glycol dimethacrylate, and polytetramethylene glycol diacrylate.

The curable composition according to an embodiment preferably has a polyfunctional radically polymerizable compound content of 0 mass% or more and 50 mass% or less. With a higher polyfunctional radically polymerizable compound content, the curable composition will tend to produce a cured product with higher impact resistance. With a lower polyfunctional radically polymerizable compound content, the curable composition will tend to provide higher compatibility for the first bismuth compound. The polyfunctional radically polymerizable compound content is more preferably 5 mass% or more and 20 mass% or less. The polyfunctional radically polymerizable compound content can be measured using, for example, NMR spectroscopy. The measurement conditions for NMR may be the same as shown above.

The curable composition preferably has a ratio M1/M3 of the mass M1 of the first bismuth compound to the mass M3 of the polyfunctional radically polymerizable compound of 0 or more and 100 or less. With a higher M1/M3 ratio, the curable composition will tend to produce a cured product having a higher ability to shield radiation. With a lower M1/M3 ratio, the curable composition will tend to produce a cured product having higher impact resistance. The M1/M3 ratio is more preferably 1 or more and 10 or less.

The curable composition according to an embodiment preferably contains both a monofunctional radically polymerizable compound and a polyfunctional radically polymerizable compound. The curable composition preferably has a ratio M10/M3 of the mass M10 of the monofunctional radically polymerizable compound to the mass M3 of the polyfunctional radically polymerizable compound of 0.1 or more and 300 or less. With a higher M10/M3 ratio, the curable composition will tend to provide higher compatibility for the first bismuth compound. With a lower M10/M3 ratio, the curable composition will tend to produce a cured product having higher impact resistance. The M10/M3 ratio is more preferably 0.1 or more and 10 or less.

The curable composition according to an embodiment preferably contains a (meth)acrylate of Formula (I) with R¹ being a tetrahydrofuryl group, another (meth)acrylate of Formula (I) with R¹ being a methoxy group, and a di(meth)acrylate of Formula (II). The curable composition containing the three polymerizable compounds can produce a cured product with reduced odor and increased impact resistance. In the curable composition, the ratio M8/M9 of the sum M8 of the mass M6 of the (meth)acrylate of Formula (I) with R¹ being a methoxy group and the mass M7 of the (meth)acrylate of Formula (I) with R¹ being a tetrahydrofuryl group to the mass M9 of the di(meth)acrylate of Formula (II) is preferably 0.1 or more and 10 or less, more preferably 0.3 or more and 5 or less, even more preferably 0.5 or more and 3 or less.

The curable composition according to an embodiment may contain 10 mass% or less of a nitrile compound. The curable composition preferably has a nitrile compound content of 5 mass% or less, more preferably 3 mass% or less, even more preferably 1 mass% or less. With a lower nitrile compound content, the curable composition will tend to produce a cured product with a lower level of odor. The content of the nitrile compound in the curable composition may have a lower limit of 100 ppm by mass or more in an example and may have a lower limit of 0 mass% in another example. The nitrile compound content can be measured using, for example, ¹H NMR spectroscopy. The NMR measurement conditions may be the same as shown above.

Examples of the nitrile compound include acrylonitrile, methacrylonitrile, crotononitrile, 2-chloroacrylonitrile, 2-cyanoethyl acrylate, allyl cyanide, allyl cyanoacetate, fumaronitrile, and 5-norbornene-2-carbonitrile.

The curable composition according to an embodiment may contain a second polymerizable compound. The term "second polymerizable compound" refers to a polymerizable compound having a boiling point at 1 atm of less than 90°C. The curable composition preferably has a second polymerizable compound content of 20 mass% or less, more preferably 10 mass% or less, even more preferably 5 mass% or less. With a lower second polymerizable compound content, the curable composition will tend to produce a cured product with a lower level of odor. The second polymerizable compound content may have a lower limit of 1 mass% or more in an example and may have a lower limit of 0 mass% in another example. The second polymerizable compound content can be measured using, for example, ¹H NMR spectroscopy.

Examples of the second polymerizable compound include methyl acrylate, allyl methyl ether, and allyl ethyl ether.

The content of any additional radically polymerizable monomer in the curable composition according to an embodiment is preferably 0 to 500 parts by mass, more preferably 0 to 400 parts by mass, even more preferably 0 to 300 parts by mass, based on 100 parts by mass of the first bismuth compound.

In the curable composition according to an embodiment, the total amount of the polymerizable compounds (hereinafter, also referred to as the "total polymerizable compound amount") is preferably 1 to 500 parts by mass, more preferably 5 to 300 parts by mass, even more preferably 10 to 200 parts by mass, based on 100 parts by mass of the first bismuth compound, in view of radiation-shielding effect, dispersibility, and coloration-reducing effect.

For use as an effective antibacterial or antiviral material, the curable composition according to an embodiment preferably contains 1 to 20000 parts by mass, more preferably 25 to 15000 parts by mass, even more preferably 10 to 9900 parts by mass of the polymerizable compounds in total, based on 100 parts by mass of the first bismuth compound.

### <Additional Additives>

In addition to the first bismuth compound, terpene, azeotropic compound, coordinating organic compound, and polymerizable compound, the curable composition according to an embodiment may contain a known additive used for common radically polymerizable curable compositions. Examples of such an additive include a radical polymerization initiator, an antioxidant, a mold release agent for increasing mold releasability, a colorant for adjusting the cured product color, and a chain transfer agent for controlling polymerization performance.

The content of each additional additive in the curable composition may be any level that will not compromise the effect of the present invention. Specifically, the curable composition preferably contains 0 to 30 parts by mass, more preferably 0.01 to 20 parts by mass, even more preferably 0.02 to 15 parts by mass of each additive, based on 100 parts by mass of the curable composition.

### <Method for Preparing the Curable Composition>

The curable composition according to an embodiment may be prepared, for example, by mixing the first bismuth compound, the terpene or azeotropic compound, and the polymerizable compound, and optionally the coordinating organic compound and any additive.

### <<Cured Product>>

An embodiment is directed to a cured product including a product resulting from curing of the curable composition according to an embodiment. The cured product may be produced using any known method. Specifically, the cured product may be produced using one or both of photopolymerization and thermal polymerization methods. What is a preferred polymerization method may be determined depending on the radical polymerization initiator, which is added as needed to the composition.

### <Physical Properties of the Cured Product>

The cured product according to an embodiment contains a high concentration of bismuth, which has a high ability to shield radiation, such as X-rays, and is highly transparent and less colored. When 2 mm-thick, for example, the cured product will have a transmittance of 80% or more at a wavelength of 560 nm, an X-ray shielding effect equivalent to that of a 0.02 mm-thick lead foil, and a yellowness index of 40 or less.

The cured product may have a bismuth content of 5 to 40 mass% based on the total mass of the cured product, which is normalized to 100 mass%.

The cured product according to an embodiment may be a resin composition including bismuth and a (meth)acrylic resin. The resin composition can only have a phenol content of 10 ppm or less as measured by gas chromatography mass spectrometry (GC/MS) using, as a standard, a polymerization inhibitor accompanying the first bismuth compound as a result of its production. Thus, the resin composition including the product resulting from curing of the curable composition containing the terpene or azeotropic compound has a reduced content of phenol, which would otherwise be a cause of odor. The phenol content of the resin composition is preferably 5 ppm or less, more preferably not more than the detection limit, as measured by GC/MS using, as a standard, a polymerization inhibitor accompanying the first bismuth compound as a result of its production. The phenol content can be determined by a process including: performing GC/MS of the sample; subjecting the same sample to ¹H NMR measurement to quantify the standard substance; and calculating the phenol content based on the area ratio between the chromatograph signals of the standard substance and phenol.

The gas chromatography mass spectrometry may be headspace GC/MS. The GC/MS measurement method may include crushing about 1 g of the resin sample, placing the crushed sample in a vial, heating the vial at 120°C for 30 minutes, introducing the volatilized vapor into the GC, and performing MS analysis.

### <Uses of the Cured Product>

The cured product according to an embodiment is transparent and less colored and thus may be used as an optical article. The cured product has an ability to shield radiation, even though transparent to visible light, and thus may be used as a transparent radiation-shield material.

The optical article including the cured product according to an embodiment may be used as a radiation-shielding window or a radiation-shielding lens.

The lens including the cured product according to an embodiment may be used to form radiation-shielding eyeglasses.

The cured product according to an embodiment has antibacterial and antiviral properties and thus may be used for applications requiring high hygiene.

### EXAMPLES

Hereinafter, the present invention will be described in detail with reference to some examples and comparative examples. It will be understood that the examples below are not intended to limit the present invention.

<Method for Analysis of the First Bismuth Compound>

IR measurement of the first bismuth compound was performed using a Fourier transform infrared spectrophotometer (Spectrum One manufactured by PerkinElmer). The IR measurement was performed under the conditions of single reflection ATR and a number of scans of 4.

TG-DTA measurement of the first bismuth compound was performed using a simultaneous thermogravimetric-differential thermal analyzer (TG8120 manufactured by Rigaku). In the measurement, scanning was performed under an air stream at a rate of temperature rise of 10°C/minute in a temperature range of room temperature to 500°C.

Raman scattering measurement of the first bismuth compound was performed using a micro-Raman spectrometer (NRS-7100 manufactured by JASCO) under the conditions of a 532 nm laser for sample excitation, a 100× objective lens, 600 line/mm grating, φ25 µm and φ4000 µm apertures, and 20 second exposure time × 2.

¹H-NMR and ³¹P-NMR measurements of the first bismuth compound were performed using a nuclear magnetic resonance spectrometer (JNM-ECA400II manufactured by JEOL). The measurements were performed under the conditions of deuterated acetone solvent and a sample concentration of 1 mass%.

XPS measurement of the first bismuth compound was performed using an X-ray photoelectron spectrometer (ESCA5701ci/MC manufactured by ULVAC-PHI). The measurement conditions were as follows: X ray source, monochromatic Al-Kα (14kV-330W); aperture diameter, φ800 µm; and photoelectron extraction angle, 45 degrees. The sample was crushed in an agate mortar, and the resulting powder was fixed to a substrate with a carbon tape and introduced into the chamber for measurement.

MALDI-TOF-MS measurement of the first bismuth compound was performed using rapiflex TOF/TOF manufactured by Bruker. The matrix was prepared using CHCA (α-cyano-4-hydroxycinnamic acid), DIT (dithranol), and DHB (2,5-dihydroxybenzoic acid), and the cationizing agent was sodium trifluoroacetate. The measurement was performed under the conditions of reflector/positive mode and mass range m/z = 20-4000.

### <Production Example 1: Production of Phosphate Ester-Bonded Bismuth-Containing Composition (First Bismuth Compound)>

A 1000 mL eggplant flask was charged with 94.27 g of bismuth(III) subsalicylate (containing 260.35 mmol of bismuth, manufactured by Sigma-Aldrich), 33.06 g of a mixture of bis[2-(methacryloyloxyethyl)] phosphate (a phosphate diester) and (2-methacryloyloxy)ethyl phosphate (a phosphate monoester) (the mixture was MR-200 manufactured by DAIHACHI Chemical Industry with a phosphate value of 162.04 mmol), 33.09 g of diphenyl-2-methacryloyloxyethyl phosphate (a phosphate triester) (MR-260 manufactured by DAIHACHI Chemical Industry, 91.33 mmol), 6.17g of dibutylhydroxytoluene (BHT) (a polymerization inhibitor) (special grade reagent manufactured by FUJIFILM Wako Pure Chemical), and 750 mL of toluene. The materials were subjected to ultrasonic dispersion using a bath sonicator to form a cloudy solution.

The resulting cloudy solution was transferred to a 1000 mL four-necked flask equipped with a Dean-Stark trap and then subjected to reaction in an oil bath at 130°C with heating and stirring while the water produced was removed from the system. The reaction endpoint was determined when no more water was produced. The reaction product was a pale yellow turbid solution with a slight amount of pale yellow precipitates.

The solution was concentrated to 250 mL using a vacuum evaporator. To the concentrate was added 8 g of alumina powder and allowed to stand overnight. The mixture was then subjected to suction filtration using 5B filter paper. To the resulting pale yellow turbid filtrate was added 3 g of activated carbon (Darco G60 manufactured by Norit), and the mixture was centrifuged at 23830 × g for 8 hours. The resulting supernatant was filtered under pressure through a 0.2 µm pore size membrane filter to give a pale yellow transparent filtrate. The solvent was removed from the resulting solution using a vacuum evaporator, and the residue was redissolved in 250 mL of acetone. To the resulting pale yellow solution was added 3 g of activated carbon (Norit SX-Plus manufactured by Norit), and the mixture was centrifuged at 23830 × g for 12 hours. The resulting supernatant was filtered under pressure through a 0.2 µm pore size membrane filter to give a pale yellow transparent filtrate. The resulting filtrate was concentrated to 100 mL using a vacuum evaporator. An acetone solution of the concentrate was added under stirring to 800 mL of hexane in a 1000 mL conical beaker. The resulting white precipitate was separated by suction filtration using 5B filter paper. The resulting solid was dried under vacuum. As a result, 64.40 g of a phosphate ester-bonded bismuth-containing composition was obtained as a white powder. The synthesis completion was confirmed using the measurement method described above.

### <Example 1>

To 65 parts by mass of the phosphate ester-bonded bismuth-containing composition (referred to as "first bismuth compound" in the table) obtained in Production Example 1 were added 12.9 parts by mass of methoxyethyl methacrylate (hereinafter referred to as "MEMA"), 6.6 parts by mass of tetrahydrofurfuryl acrylate (hereinafter referred to as "THFAA"), and 13.9 parts by mass of nonaethylene glycol dimethacrylate (hereinafter referred to as "9G") as polymerizable compounds. To the resulting mixture was added 1 part by mass of (-)-α-pinene. To the mixture was further added 0.6 parts by mass of a methyl styrene dimer (additional additive) and uniformly dissolved to form a curable composition. To the curable composition were further added 0.9 parts by mass of 2,2'-azobis(2-methylbutyronitrile) (V-59) and 0.05 parts by mass of 1,1'-azobis(cyclohexane-1-carbonitrile) (V-40) and dissolved completely. From the curable composition, the dissolved oxygen was removed under reduced pressure using a vacuum pump. The resulting curable composition was then injected into a 2 mm-thick space between two glass molds fixed with a gasket and subjected to a polymerization process including: heating it to a maximum temperature of 90°C over 15 hours; and holding it at 90°C for 2 hours to form a pale yellow transparent cured product.

### <Example 2>

A pale yellow transparent cured product was obtained using the same procedure as in Example 1 except that 1 part by mass of (-)-β-pinene was used instead of (-)-α-pinene.

### <Example 3>

A pale yellow transparent cured product was obtained using the same procedure as in Example 1 except that 1 part by mass of (±)-camphene was used instead of (-)-α-pinene.

### <Example 4>

A pale yellow transparent cured product was obtained using the same procedure as in Example 1 except that 1 part by mass of limonene was used instead of (-)-α-pinene.

### <Example 5>

A pale yellow transparent cured product was obtained using the same procedure as in Example 1 except that 1 part by mass of p-cymene was used instead of (-)-α-pinene.

### <Example 6>

A pale yellow transparent cured product was obtained using the same procedure as in Example 1 except that 1 part by mass of 1,8-cineole was used instead of (-)-α-pinene.

### <Example 7>

A pale yellow transparent cured product was obtained using the same procedure as in Example 1 except that 1 part by mass of linalool was used instead of (-)-α-pinene.

### <Example 8>

A pale yellow transparent cured product was obtained using the same procedure as in Example 1 except that 1 part by mass of (+)-camphor was used instead of (-)-α-pinene.

### <Example 9>

A pale yellow transparent cured product was obtained using the same procedure as in Example 1 except that 1 part by mass of l-menthol was used instead of (-)-α-pinene.

### <Example 10>

A pale yellow transparent cured product was obtained using the same procedure as in Example 1 except that 1 part by mass of terpinolene was used instead of (-)-α-pinene.

### <Example 11>

A pale yellow transparent cured product was obtained using the same procedure as in Example 1 except that 1 part by mass of α-terpinene was used instead of (-)-α-pinene.

### <Example 12>

A pale yellow transparent cured product was obtained using the same procedure as in Example 1 except that 1 part by mass of phenetole was used instead of (-)-α-pinene.

### <Example 13>

To 65 parts by mass of the phosphate ester-bonded bismuth-containing composition obtained in Production Example 1 were added 12.5 parts by mass of MEMA, 6.3 parts by mass of THFAA, and 13.6 parts by mass of 9G as polymerizable compounds to form a mixture. A pale yellow transparent cured product was obtained using the same procedure as in Example 1 except that 1 part by mass of (-)-α-pinene (a terpene) and 1 part by mass of imidazole (a coordinating organic compound) were added to the resulting mixture to form a curable composition. The imidazole has an acid dissociation constant pKa of 13.89.

### <Example 14>

A pale yellow transparent cured product was obtained using the same procedure as in Example 13 except that (-)-β-pinene was used instead of (-)-α-pinene.

### <Example 15>

A pale yellow transparent cured product was obtained using the same procedure as in Example 13 except that (±)-camphene was used instead of (-)-α-pinene.

### <Example 16>

A pale yellow transparent cured product was obtained using the same procedure as in Example 13 except that limonene was used instead of (-)-α-pinene.

### <Example 17>

A pale yellow transparent cured product was obtained using the same procedure as in Example 13 except that p-cymene was used instead of (-)-α-pinene.

### <Example 18>

A pale yellow transparent cured product was obtained using the same procedure as in Example 13 except that 1,8-cineole was used instead of (-)-α-pinene.

### <Example 19>

A pale yellow transparent cured product was obtained using the same procedure as in Example 13 except that linalool was used instead of (-)-α-pinene.

### <Example 20>

A pale yellow transparent cured product was obtained using the same procedure as in Example 13 except that (+)-camphor was used instead of (-)-α-pinene.

### <Example 21>

A pale yellow transparent cured product was obtained using the same procedure as in Example 13 except that l-menthol was used instead of (-)-α-pinene.

### <Example 22>

A pale yellow transparent cured product was obtained using the same procedure as in Example 13 except that terpinolene was used instead of (-)-α-pinene.

### <Example 23>

A pale yellow transparent cured product was obtained using the same procedure as in Example 13 except that α-terpinene was used instead of (-)-α-pinene.

### <Example 24>

A pale yellow transparent cured product was obtained using the same procedure as in Example 13 except that phenetole was used instead of (-)-α-pinene.

### <Comparative Example 1>

To 65 parts by mass of the phosphate ester-bonded bismuth-containing composition obtained in Production Example 1 were added 13 parts by mass of MEMA, 6.7 parts by mass of THFAA, and 14 parts by mass of 9G as polymerizable compounds to form a mixture. A 2.42 mm-thick pale yellow transparent cured product was obtained using the same procedure as in Example 1 except that 0.3 parts by mass of a methyl styrene dimer and 1 part by mass of α-methyl styrene were added as additional additives to the resulting mixture without addition of any terpene to form a curable composition.

### <Evaluation Tests>

### [Measurement of X-Ray Shielding Ability]

The X-ray shielding ability of the resulting cured product was evaluated by measuring the transmission of X-rays and determining the lead-equivalent according to JIS T 61331-1 "Protective devices against diagnostic medical X-radiationPart 1: Determination of attenuation properties of materials". The measurement was performed using an X-ray apparatus (MG-45 manufactured by YXLON International) under the conditions of an X-ray tube voltage of 120 kV, a tube current of 12.5 mA, and a 2.5 mm Al additional filtration plate. The distance between the X-ray tube focal point and the sample was 600 mm, and the distance between the sample and the measuring device was 900 mm. The measuring device was an ionization chamber radiation dosimeter (RAMTEC-Solo (A4 probe) manufactured by Toyo Medic). The X-ray shielding ability of the cured product was evaluated by determining the lead equivalent (mmPb), which corresponds to the thickness (mm) of a lead sheet having the same X-ray shielding ability. As a result, the cured products of all the examples and the comparative example had a lead equivalent of 0.10 ± 0.04 mmPb.

### [Measurement of Yellowness Index]

The yellowness index of the resulting cured product was measured using a color meter (SM-T45 manufactured by Suga Test Instruments). The measured yellowness index was divided by the thickness (mm) of the cured product, and the resulting Y.I. per unit thickness was evaluated. The results are shown in Tables 1 to 4. The thickness of the cured product was measured using a digital micrometer.

### [Haze Measurement]

The haze of the resulting cured product was measured using a haze meter (NDH5000 manufactured by Nippon Denshoku Industries). The measured haze value was divided by the thickness (mm) of the cured product, and the resulting haze per unit thickness was evaluated. The results are shown in Tables 1 to 4.

### [Measurement of Odor Intensity]

The odor intensity of the resulting cured product was measured and evaluated using a potable odor sensor (XP-329m manufactured by New Cosmos Electric). First, the sensor was placed upright with its odor suction port facing upward, and a ring-shaped lens sample holder was horizontally fixed above the port using a clamp. A lens sample (cured product) was fixed to the ring-shaped sample holder with the most convex center of the lens sample (the lowermost part of the lens sample in this orientation) facing the odor suction port of the sensor and with a distance of 5 mm between the odor suction port of the sensor and the bottom surface portion of the lens sample facing downward. Preliminary operation was performed until the measurement stabilized before the lens sample was fixed to the holder. At that point (0 second), the stopwatch was started while the odor intensity displayed digitally on the sensor was read. After 60 seconds, the displayed odor intensity was read, and the odor intensity of the sample was calculated by subtracting the value read at 0 second from the value read at 60 seconds. After the measurement, the sensor was run for 2 minutes or more with no sample, and after it was confirmed that the measurement stabilized, the next measurement was performed. The measurement was performed five times, and the measurements were averaged. The results are shown in Tables 1 to **4.**

### [Impact Resistance Measurement]

The resulting cured product was subjected to a falling ball test for the evaluation of its impact resistance. First, an NBR support ring was attached to a tube with an inner diameter of 25 mm, an outer diameter of 32 mm, and a height of 25 mm. The support ring had a thickness of 3 mm and an inner diameter of 25 mm. The cured product was placed on the support ring. A steel ball was dropped onto the cured product from a height of 1.27 m using a drop ball tester with an electromagnet. The steel balls used weighed 4.5 g, 6.9 g, 14 g, 16 g, 32 g, 50 g, 67 g, 80 g, 95 g, 112 g, 130 g, 151 g, 174 g, 198 g, 225 g, and 261 g. The steel balls were dropped in order of increasing weight, and the weight of the steel ball just before one that cracked or broke the cured product was determined to be the maximum impact resistance value. The results are shown in Tables 1 and 3.

### [Quantification of Volatilized Phenol]

The cured product of Example 3 was placed in a 10 cm square polyethylene zipper bag and then allowed to stand for 1 minute. Subsequently, the concentration of phenol volatilized in the polyethylene bag was measured using a phenol gas detector tube. The measured concentration of phenol volatilized from the cured product of Example 3 was 5 ppm.

**[Table 1]**

| | Curable composition | | | Cured product | | | |
|---|---|---|---|---|---|---|---|
| | Terpene | | | Y. I. /d | Haze | Odor intensity | Impact resistance |
| | Type | Boiling point | Azeotropic point with phenol | | | | |
| Example 1 | (-)-α-Pinene | 155.80 | 152.75 | 12.43 | 0.33 | 80.2 | 16.0 |
| Example 2 | (-)-β-Pinene | 163.80 | 159.00 | 12.17 | 0.40 | 34.8 | 16.0 |
| Example 3 | (±)-Camphene | 159.60 | 156.10 | 12.12 | 0.46 | 35.0 | 32.0 |
| Example 4 | Limonene | 177.80 | 169.00 | 11.99 | 0.37 | 55.0 | 16.0 |
| Example 5 | p-Cymene | 176.70 | 170.50 | 12.48 | 0.34 | 56.2 | 32.0 |
| Example 6 | 1,8-Cineole | 176.40 | 182.85 | 12.83 | 0.37 | 127.8 | 16.0 |
| Example 7 | Linalool | 198.60 | - | 13.15 | 0.44 | 75.4 | 50.0 |
| Example 8 | (+)-Camphor | 209.10 | - | 13.40 | 0.33 | 59.2 | 67.0 |
| Example 9 | l-Menthol | 212.00 | - | 11.82 | 0.34 | 113.8 | 32.0 |
| Example 10 | Terpinolene | 185.00 | 173.00 | 14.73 | 0.34 | 110.4 | 32.0 |
| Comparative Example 1 | Absent | - | - | 10.66 | 0.50 | 193-260 | - |

**[Table 2]**

| | Curable composition | | | Cured product | | |
|---|---|---|---|---|---|---|
| | Terpene | | | Y.I./d | Haze | Odor intensity |
| | Type | Boiling point | Azeotropic point with phenol | | | |
| Example 11 | α-Terpinene | 173.40 | 166.70 | 13.20 | 0.43 | 99.0 |
| Example 12 | Phenetole | 170.45 | - | 12.78 | 0.33 | 82.8 |

**[Table 3]**

| | Curable composition | | Cured product | | | |
|---|---|---|---|---|---|---|
| | Terpene | Coordinating organic compound | Y.I./d | Haze | Odor intensity | Impact resistance |
| Example 13 | (-)-α-Pinene | Imidazole | 9. 94 | 0.36 | 49.4 | 16.0 |
| Example 14 | (-)-β-Pinene | Imidazole | 10.75 | 0.63 | 18.4 | 32.0 |
| Example 15 | (±)-Camphene | Imidazole | 10.07 | 0.52 | 23.2 | 16.0 |
| Example 16 | Limonene | Imidazole | 8.28 | 0.42 | 101. 2 | 16.0 |
| Example 17 | p-Cymene | Imidazole | 10.13 | 0.37 | 63.8 | 32.0 |
| Example 18 | 1,8-Cineole | Imidazole | 10.54 | 0.49 | 60.6 | 16.0 |
| Example 19 | Linalool | Imidazole | 10.48 | 0.40 | 63.2 | 16.0 |
| Example 20 | (+) -Camphor | Imidazole | 9.30 | 0.33 | 92.8 | 16.0 |
| Example 21 | l-Menthol | Imidazole | 9.74 | 0.38 | 90.4 | 50.0 |
| Example 22 | Teripinolene | Imidazole | 11.63 | 0.40 | 79.2 | - |

**[Table 4]**

| | Curable composition | | Cured product | | |
|---|---|---|---|---|---|
| | Terpene | Coordinating organic compound | Y . I . /d | Haze | Odor intensity |
| Example 23 | α-Terpinene | Imidazole | 11.02 | 0.35 | 72.2 |
| Example 24 | Phenetole | Imidazole | 10.32 | 0.33 | 63.4 |

The results shown above indicate that less odorous cured products can be successfully produced using terpenes.

### <Reference Example 1>

To 65 parts by mass of the phosphate ester-bonded bismuth-containing composition (referred to as "first bismuth compound" in the table) obtained in Production Example 1 were added 12.9 parts by mass of methoxyethyl methacrylate (hereinafter referred to as "MEMA"), 6.6 parts by mass of tetrahydrofurfuryl acrylate (hereinafter referred to as "THFAA"), and 13.9 parts by mass of nonaethylene glycol dimethacrylate (hereinafter referred to as "9G") as polymerizable compounds. To the resulting mixture was added 1 part by mass of 2-methylimidazole as a coordinating organic compound. To the mixture was further added 0.6 parts by mass of a methyl styrene dimer (additional additive) and uniformly dissolved to form a curable composition. To the curable composition were further added 0.9 parts by mass of 2,2'-azobis(2-methylbutyronitrile) (V-59) and 0.05 parts by mass of 1,1'-azobis(cyclohexane-1-carbonitrile) (V-40) and dissolved completely. From the curable composition, the dissolved oxygen was removed under reduced pressure using a vacuum pump. The resulting curable composition was then injected into a 2 mm-thick space between two glass molds fixed with a gasket and subjected to a polymerization process including: heating it to a maximum temperature of 90°C over 15 hours; and holding it at 90°C for 2 hours to form a pale yellow transparent cured product. The resulting cured product was measured for yellowness index (Y.I.) per unit thickness and for odor intensity. Table 5 shows the results together with the pKa of the coordinating organic compound used.

### <Reference Example 2>

A pale yellow transparent cured product was obtained using the same procedure as in Reference Example 1 except that 1 part by mass of dimethylaminoethyl methacrylate was used instead of 2-methylimidazole. The results are shown in Table 5.

### <Reference Example 3>

A pale yellow transparent cured product was obtained using the same procedure as in Reference Example 1 except that 1 part by mass of imidazole was used instead of 2-methylimidazole. The results are shown in Table 5.

### <Reference Example 4>

A pale yellow transparent cured product was obtained using the same procedure as in Reference Example 1 except that 1 part by mass of pyrazole was used instead of 2-methylimidazole. The results are shown in Table 5.

### <Reference Example 5>

A pale yellow transparent cured product was obtained using the same procedure as in Reference Example 1 except that 1 part by mass of 4-methylimidazole was used instead of 2-methylimidazole. The results are shown in Table 5.

### <Reference Example 6>

A pale yellow transparent cured product was obtained using the same procedure as in Reference Example 1 except that 1 part by mass of N-acetylimidazole was used instead of 2-methylimidazole. The results are shown in Table 5.

### <Reference Example 7>

A pale yellow transparent cured product was obtained using the same procedure as in Reference Example 1 except that 1 part by mass of triazole was used instead of 2-methylimidazole. The results are shown in Table 5.

### <Reference Example 8>

A pale yellow transparent cured product was obtained using the same procedure as in Reference Example 1 except that 1 part by mass of 1-vinylimidazole was used instead of 2-methylimidazole. The results are shown in Table 5.

### <Reference Example 9>

A pale yellow transparent cured product was obtained using the same procedure as in Reference Example 1 except that 1 part by mass of 2-isopropylimidazole was used instead of 2-methylimidazole. The results are shown in Table 5.

### <Reference Example 10>

A pale yellow transparent cured product was obtained using the same procedure as in Reference Example 1 except that 1 part by mass of maleic acid (in the form of maleic anhydride) was used instead of 2-methylimidazole. The results are shown in Table 5.

### <Reference Example 11>

A pale yellow transparent cured product was obtained using the same procedure as in Reference Example 1 except that 1 part by mass of (trimethylsilyl)imidazole was used instead of 2-methylimidazole. The results are shown in Table 5.

### <Reference Example 12>

A pale yellow transparent cured product was obtained using the same procedure as in Reference Example 1 except that 1 part by mass of benzimidazole was used instead of 2-methylimidazole. The results are shown in Table 5.

### <Reference Example 13>

A pale yellow transparent cured product was obtained using the same procedure as in Reference Example 1 except that 1 part by mass of allylimidazole was used instead of 2-methylimidazole. The results are shown in Table 5.

### <Reference Example 14>

A pale yellow transparent cured product was obtained using the same procedure as in Reference Example 1 except that 1 part by mass of 2-(tert-butylamino)ethyl methacrylate was used instead of 2-methylimidazole. The results are shown in Table 5.

### <Reference Example 15>

A pale yellow transparent cured product was obtained using the same procedure as in Reference Example 1 except that 1 part by mass of methacrylic acid (in the form of methacrylic anhydride) was used instead of 2-methylimidazole. The results are shown in Table 5.

### <Reference Example 16>

A pale yellow transparent cured product was obtained using the same procedure as in Reference Example 1 except that 1 part by mass of 1,2-dimethylimidazole was used instead of 2-methylimidazole. The results are shown in Table 5.

### <Reference Example 17>

A pale yellow transparent cured product was obtained using the same procedure as in Reference Example 1 except that 1 part by mass of 3,5-dimethylpyrazole was used instead of 2-methylimidazole. The results are shown in Table 5.

### <Reference Example 18>

A pale yellow transparent cured product was obtained using the same procedure as in Reference Example 1 except that 1 part by mass of carbazole was used instead of 2-methylimidazole. The results are shown in Table 5.

### <Reference Example 19>

A pale yellow transparent cured product was obtained using the same procedure as in Reference Example 1 except that 1 part by mass of indole was used instead of 2-methylimidazole. The results are shown in Table 5.

### <Reference Example 20>

To 65 parts by mass of the phosphate ester-bonded bismuth-containing composition obtained in Production Example 1 were added 12.5 parts by mass of MEMA, 6.3 parts by mass of THFAA, and 13.6 parts by mass of 9G as polymerizable compounds to form a mixture. A pale yellow transparent cured product was obtained using the same procedure as in Example 1 except that 1 part by mass of imidazole and 1 part by mass of maleic anhydride were added as coordinating organic compounds to the resulting mixture to form a curable composition. The results are shown in Table 6.

### <Reference Example 21>

A pale yellow transparent cured product was obtained using the same procedure as in Reference Example 20 except that 1 part by mass of methacrylic anhydride was used instead of maleic anhydride. The results are shown in Table 6.

### <Comparative Example 2>

A pale yellow transparent cured product was obtained using the same procedure as in Reference Example 1 except that 1 part by mass of pyrazine was used instead of 2-methylimidazole. The results are shown in Table 5.

### <Evaluation Tests>

### [Measurement of X-Ray Shielding Ability]

The X-ray shielding ability of the resulting cured product was evaluated by measuring the transmission of X-rays and determining the lead-equivalent according to JIS T 61331-1 "Protective devices against diagnostic medical X-radiationPart 1: Determination of attenuation properties of materials". The measurement was performed using an X-ray apparatus (MG-45 manufactured by YXLON International) under the conditions of an X-ray tube voltage of 120 kV, a tube current of 12.5 mA, and a 2.5 mm Al additional filtration plate. The distance between the X-ray tube focal point and the sample was 600 mm, and the distance between the sample and the measuring device was 900 mm. The measuring device was an ionization chamber radiation dosimeter (RAMTEC-Solo (A4 probe) manufactured by Toyo Medic). The X-ray shielding ability of the cured product was evaluated by determining the lead equivalent (mmPb), which corresponds to the thickness (mm) of a lead sheet having the same X-ray shielding ability. As a result, the cured products of all the reference examples and the comparative example had a lead equivalent of 0.10 ± 0.04 mmPb.

### [Measurement of Yellowness Index]

The yellowness index of the resulting cured product was measured using a color meter (SM-T45 manufactured by Suga Test Instruments). The measured yellowness index was divided by the thickness (mm) of the cured product, and the resulting Y.I. per unit thickness was evaluated. The results are shown in Tables 5 and 6. The thickness of the cured product was measured using a digital micrometer.

### [Measurement of Odor Intensity]

The odor intensity of the resulting cured product was measured and evaluated using a potable odor sensor (XP-329m manufactured by New Cosmos Electric). First, the sensor was placed upright with its odor suction port facing upward, and a ring-shaped lens sample holder was horizontally fixed above the port using a clamp. A lens sample (cured product) was fixed to the ring-shaped sample holder with the most convex center of the lens sample (the lowermost part of the lens sample in this orientation) facing the odor suction port of the sensor and with a distance of 5 mm between the odor suction port of the sensor and the bottom surface portion of the lens sample facing downward. Preliminary operation was performed until the measurement stabilized before the lens sample was fixed to the holder. At that point (0 second), the stopwatch was started while the odor intensity displayed digitally on the sensor was read. After 60 seconds, the displayed odor intensity was read, and the odor intensity of the sample was calculated by subtracting the value read at 0 second from the value read at 60 seconds. After the measurement, the sensor was run for 2 minutes or more with no sample, and after it was confirmed that the measurement stabilized, the next measurement was performed. The measurement was performed five times, and the measurements were averaged. The results are shown in Tables 5 and 6.

**[Table 5]**

| | Coordinating organic compound | | | | Cured product | |
|---|---|---|---|---|---|---|
| | Type | pKa | Molecular weight | Boiling point | Y.I./d | Odor intensity |
| Reference Example 1 | 2-Methylimidazole | 14.44 | 82.11 | 270°C | 8.29 | 112.0 |
| Reference Example 2 | 2-(Dimethylamino)ethyl methacrylate | 8.18 | 157.21 | 182-192°C | 8.80 | 33.0 |
| Reference Example 3 | Imidazole | 13.89 | 68.08 | 256°C | 8.84 | 48.7 |
| Reference Example 4 | Pyrazole | 14.00 | 68.08 | 188°C | 8.95 | 46.3 |
| Reference Example 5 | 4-Methylimidazole | 14.83 | 82.11 | 263°C | 9.29 | 162.0 |
| Reference Example 6 | N-Acetylimidazole | 3.60 | 82.11 | 198°C | 9.31 | 40.0 |
| Reference Example 7 | 1,2,4-Triazole | 10.18 | 69.07 | 260°C | 9.33 | 65.3 |
| Reference Example 8 | 1-Vinylimidazole | 6.07 | 94.12 | 192-194°C | 9.39 | 30.7 |
| Reference Example 9 | 2-Isopropylimidazole | 14.30 | 110.16 | 256-260°C | 9.65 | 106.8 |
| Reference Example 10 | Maleic anhydride | 2.39 | 98.06 | 202°C | 9.80 | 37.7 |
| Reference Example 11 | (Trimethylsilyl)imidazole | 7.96 | 140.26 | 91°C (12 mmHg) | 9.82 | 78.0 |
| Reference Example 12 | Benzimidazole | 12.56 | 118.14 | >360°C | 10.12 | 89.8 |

| Type | pKa | Molecular weight | Boiling point | Y.I./d | odor intensity | |
|---|---|---|---|---|---|---|
| Reference Example 13 | 1-Allylimidazole | 6.80 | 108.14 | 116°C (16 mmHg) | 10.16 | 61.0 |
| Reference Example 14 | 2-(tert-Butylamino)ethyl methacrylate | 8.99 | 185.27 | 105°C (12 mmHg) | 160.218 | 85.4 |
| Reference Example 15 | Methacrylic anhydride | 4.58 | 154.17 | 205°C | 10.35 | 44.3 |
| Reference Example 16 | 1,2-Dimethylimidazole | 7.76 | 96.13 | 205°C | 10.42 | 177.8 |
| Reference Example 17 | 3,5-Dimethylpyrazole | 15.12 | 96.13 | 218°C | 10.70 | 129.4 |
| Reference Example 18 | Carbazole | 17.00 | 167.21 | 355°C | 19.80 | 79.8 |
| Reference Example 19 | Indole | 17.00 | 117.15 | 128-133°C | 28.50 | 99.4 |
| Comparative Example 2 | Pyrazine | 1.22 | 80.09 | 118°C | 37.57 | 289.4 |

**[Table 6]**

| | First coordinating organic compound | | Second coordinating organic compound | | Cured product | |
|---|---|---|---|---|---|---|
| | Type | Amount | Type | Amount | Y.I./d | Odor intensity |
| Reference Example 20 | Imidazole | 1 | Maleic anhydride | 1 | 8.47 | 28.0 |
| Reference Example 21 | Imidazole | 1 | Methacrylic anhydride | 1 | 9.03 | 22.0 |

The results shown above indicate that less odorous cured products can be successfully produced using a coordinating organic compound having an acid dissociation constant pKa of 1.5 or more.

The results also indicate that less odorous cured products with lower yellowness indices (Y.I.) can be produced when a coordinating organic compound having an acid dissociation constant pKa in the range of 2.0 to 15.0 is used than when no coordinating organic compound is used.

## Claims

1. A composition comprising:
a first bismuth compound comprising bismuth and at least one selected from the group consisting of an acryloyl group and a methacryloyl group; and
a terpene.

2. The composition according to claim 1, wherein a ratio M1/M2 of a mass M1 of the first bismuth compound to a mass M2 of the terpene is 4 or more and 4990 or less.

3. The composition according to claim 1, wherein the terpene comprises at least one compound selected from the group consisting of a semiterpene, a semiterpene derivative, a monoterpene, a monoterpene derivative, a sesquiterpene, and a sesquiterpene derivative.

4. The composition according to claim 1, wherein the terpene comprises at least one compound selected from the group consisting of a monocyclic monoterpene, a monocyclic monoterpene derivative, a bicyclic monoterpene, and a bicyclic monoterpene derivative.

5. The composition according to claim 1, wherein the terpene comprises at least one compound selected from the group consisting of (-)-α-pinene, (-)-β-pinene, (±)-camphene, α-terpinene, limonene, phenetole, p-cymene, terpinolene, 1,8-cineole, linalool, (+)-camphor, l-menthol, d-menthol, 1,4-cineole, nopinene, α-phellandrene, fenchone, borneol, and citronellol.

6. The composition according to claim 1, wherein the terpene has a boiling point at 1 atm of 95°C or more and 250°C or less.

7. The composition according to claim 1, further comprising a coordinating organic compound having an acid dissociation constant pKa of 1.5 or more.

8. The composition according to claim 1, wherein the first bismuth compound further has a phosphate bond.

9. The composition according to claim 1, wherein the first bismuth compound further has a phenyl group.

10. A curable composition comprising:
the composition according to any one of claims 1 to 9; and
a first polymerizable compound having at least one polymerizable group selected from the group consisting of an acryloyl group, a methacryloyl group, a vinyl group, and an allyl group.

11. The curable composition according to claim 10, wherein the curable composition has a content of the first bismuth compound of 10 mass% or more and 90 mass% or less.

12. A cured product comprising a product resulting from curing of the curable composition according to claim 10.

13. An optical article comprising the cured product according to claim 12.

14. A lens comprising the cured product according to claim 12.

15. A set of eyeglasses comprising the lens according to claim 14.

16. An antibacterial or antiviral agent comprising the cured product according to claim 12.

17. A composition comprising:
a first bismuth compound comprising bismuth and at least one selected from the group consisting of an acryloyl group and a methacryloyl group; and
a compound azeotropic with phenol.
